# EUROPEAN PATENT APPLICATION

(11) **EP 4 371 710 A1**
(43) Date of publication of application: **22.05.2024**
(21) Application number: 23194924.9
(22) Date of filing: 01.09.2023
(51) Int. Cl.: B25J 5/00, B25J 9/14, B25J 19/00, B62D 63/02, B60K 7/00

(54) **ROBOTIC CRAWLER PLATFORM SYSTEMS AND METHODS**

(30) Priority: 25.09.2022 US 202263409806 P; 19.12.2022 US 202218084423
(71) Applicant: Hayes, Kimberley Anne, San Antonio, TX 78253 (US)
(72) Inventor: Hayes, Kimberley Anne, San Antonio, TX 78253 (US)
(74) Representative: Lambrinos, Matthew Franklin

(57) **Abstract**

A non-electric robotic crawler platform system and method for logically controlling a pneumatically driven multidirectional multi-motor crawler platform in a confined space that can include Zone 0 and 1 spaces. The system can include a robotic crawler platform and an air logic control system. The robotic crawler platform can include wheels and pneumatic motors. The pneumatic motors can be connected to the wheels. Wheels can be polymer, magnetic, rollers, sprockets for track driven system and other motion systems. The air logic control system can be in fluid communication with the pneumatic motors. The robotic crawler platform and the air logic control system are non-electric. The robotic crawler platform and the air logic control system are made from materials having anti-static properties. A user can provide motion control input to the air logic control system to control directional motion of the robotic crawler platform by controlling any one of or any combination of the pneumatic motors in either a forward or reverse rotation direction. Precision can be obtained through flow/pressure controls either onboard the robotic platform to the motors or exhaust controls plumed exhaust flow regulators from the air piloted shuttle valves.

## Description

### CROSS REFERENCE TO RELATED APPLICATIONS

This application claims the benefit of U.S. Provisional Application No. 63/409, 806, filed September 25, 2022, and claims the benefit of U.S. Provisional Application No. 63/291,156, filed December 17, 2021, the entire contents of each of which is incorporated herein by reference as if fully set forth herein.

### BACKGROUND

### TECHNICAL FIELD

One or more embodiments of the present technology relates to a robotic crawler platform, and more particularly but not exclusively, to a robotic crawler platform for use in connection with air logic, the air logic controlling a pneumatically driven multidirectional multi-motor crawler platform. In some embodiments of the present technology, the robotic crawler platform and air logic control does not utilize electronics that could potentially cause a spark. Further, one or more embodiments of the present technology can be utilized in connection with hazardous, Zone 0 or Zone 1 area inspections. One or more embodiments relates to an air logic control system for use with the robotic crawler platform. One or more embodiments relates to methods of operating the robotic crawler platform(s) and air logic control system. One or more embodiments relates to methods of inspection utilizing the robotic crawler platform(s). Some embodiments described in this specification relate generally to automated inspection systems, and more particularly, to remote controlled pneumatic robotic crawler for non-destructive testing of hazardous environments.

### BACKGROUND DESCRIPTION

Many industries utilize confined spaces or Zones (Zones 0-2 and 20-22) for use as a human work area. For example, a confined spaces inspection can require a substantial amount of paperwork prior to and are often cleaned out prior to human entry. A work area can be defined as a confined space if the following criteria are met: 1) limited openings for entry and exit; 2) the space is not intended for continuous human occupancy; and 3) the space is large enough for human entry and to conduct work. An example of a Zone workspace can be Zone 0 which is the assumption that there is always the presence of explosive conditions. These zones present many challenges and safety issues to workers and to industry. Another example of a Zone workspace can be Zone 1 therefore, it should be assumed that any spark or charge build-up could present the source for an ignition/explosion to occur. Additional examples of Zone work spaces are: Zone 2 - ignitable concentrations of flammable gases or vapors which are not likely to occur under normal operating conditions and do so only for a short period of time; Zone 20 - an area where combustible dusts or ignitable fibers and flyings are present continuously or for long periods of time; Zone 21 - an area where combustible dusts or ignitable fibers and flyings are likely to occur under normal operating conditions; and Zone 22 - an area where combustible dusts or ignitable fibers and flyings are not likely to occur under normal operating conditions and do so only for a short period of time.

Worker safety is a global concern, with specific attention placed on inspection or servicing in confined spaces in hazardous environments. When addressing the human equity concern of inspection, it is important to keep in mind that millions of workers enter and conduct work in confined spaces annually and around two workers die every week in accidents related to confined spaces. It has been appreciated that around 60% of those fatalities are would-be-rescuers.

There is thus a great need to keep worker safe and to overcome the present disadvantages of current systems or methods when it comes to safety in confined spaces as well as addressing the double fault when it occurs in hazardous environments with Zone 1 or 0. Industry must seek innovation to mitigate this issue whenever possible. Robotic platforms present an advantage in replacing humans, yet few certify explosion proof (Ex) robotic platforms service industry as there are still electronic dependence.

Fluid controlled systems mitigate one of the three requirements for an explosion, the ignition source presented in electronic systems. Two primary fluid systems are in liquid state, hydraulics and air, pneumatics.

Hydraulic drive systems are a nonelectric option and have extensive use in aircraft and heavy utility systems yet have limited deployments in robotic platforms and are often not exclusive hydraulic logic control. Hydraulics' non-compressible state presents a wider adoption over the use of pneumatics when precise control is required and present exponential lifting performance as it can produce 800-900 bars where pneumatics only creates 8-10 bars of pressure.

Pneumatic robots are known that can be utilized in confined spaces, and which may increase worker safety. However, these known robots may not comply with Equipment intended for use in explosive atmospheres (ATEX) and International Electrotechnical Commission System for Certification to Standards Relating to Equipment for Use in Explosive Atmospheres (IECEx) standards or requirements. IECEx is the International Electrotechnical Commission (IEC) System for Certification to Standards Relating to Equipment for Use in Explosive Atmospheres. ATEX or IECEx use quality assessment specifications that are based on International Standards prepared by the IEC and International Organization for Standardization (ISO).

Confined space entry and hazardous carbon fumes present costly and dangerous risks for industry and inspectors. Electronic systems and static discharge concerns need mitigation while presenting access to difficult to access locations. Current inspection process is done with humans in confined spaces, which is dangerous for the asset and the human. Electric motors and static discharging materials are of great concern. The system in design introduces movement without discharge potential. Therefore, what is needed in some embodiments, is a non-destructive pneumatic crawler platform option for inspection platform for solutions.

Furthermore, there are other applications that do not require robots to meet such standards for use in explosive atmospheres or that are not required for use in explosive atmospheres at all, that still require improved robotic crawler platforms and control systems.

### SUMMARY

In view of the foregoing disadvantages inherent in the known types of pneumatic robot platforms, one or more embodiments of the present technology provides a novel robotic crawler platform system and method and overcomes one or more of the mentioned disadvantages and drawbacks of the known pneumatic robots. As such, the general purpose of one or more embodiments of the present technology, which will be described subsequently in greater detail, is to provide a new and novel robotic crawler platform system and method which may have the advantages of the known pneumatic robots mentioned heretofore and many novel features that result in a robotic crawler platform system and method which is not anticipated, rendered obvious, suggested, or even implied by the known pneumatic robots, either alone or in any combination thereof.

According to one aspect, one or more embodiments of the present technology can include an apparatus including a robotic crawler platform and an air logic control system. The robotic crawler platform can include wheels and pneumatic motors. The pneumatic motors can be connected to the wheels. The air logic control system can be in fluid communication with the pneumatic motors. Flow and pressure control mitigate one or more stated disadvantages over hydraulics and may present a totally mechanical control system.

In some aspects of the present technology, the robotic crawler platform and the air logic control system are non-electric. In some embodiments, the robotic crawler platform and the air logic control system are made from materials having anti-static properties.

According to another aspect, one or more embodiments of the present technology can include a system including a robotic crawler platform and an air logic control system. The robotic crawler platform can include wheels, pneumatic motors and air logic valves in fluid communication with the pneumatic motors. The pneumatic motors can be connected to the wheels. The air logic control system can be in fluid communication with the air logic valves. In some embodiments, the robotic crawler platform and the air logic control system are non-electric. The robotic crawler platform and the air logic control system may be made from materials having anti-static properties. The air logic valves can be configured to control fluid entering the pneumatic motors based on a pneumatic signal from the air logic control system.

According to some embodiments of the present technology, compensatory measures in communication delays in the fluid controls may be provided in the system to support responsiveness and precision through pressure regulations through the inlet to the motors and flow controls in the exhaust and vice versa. In some embodiments, one or more control valves are in fluid communication with one or more exhaust ports of air logic valves in fluid communication with the pneumatic motors. In some embodiments, the air logic valves comprise throttle valves. In some embodiments, one or more regulators configured in the incoming pneumatic power line.

According to yet another aspect, one or more embodiments of the present technology can include a method of operating an apparatus including a robotic crawler platform and an air logic control system. The method can include the steps of operating the robotic crawler platform in a confined space with the air logic control system exterior of the confined space. Provide one or more user inputs to the air logic control system corresponding to one or more desired motions of the robotic crawler platform to control the pneumatic motors.

In some or all embodiments, the robotic crawler platform can include air logic valves that can be in fluid communication with the pneumatic motors and with the air logic control system.

In some or all embodiments, the air logic valves can be configured to control fluid entering the pneumatic motors based on a pneumatic signal from the air logic control system.

According to some embodiments of the present technology, the method can provide compensatory measures in communication delays in the fluid controls in the system to support responsiveness and precision through pressure regulations through the inlet to the motors and flow controls in the exhaust and vice versa. In some embodiments, the method can further comprise the step of controlling the flow of fluid exhausting from one or more air logic valves in fluid communication with the pneumatic motors to provide directional exhaust restrictions independently to each direction (forward/reverse) of each motor. In some embodiments, the step of controlling the flow of fluid exhausting from one or more air logic valves in fluid communication with the pneumatic motors can comprise controlling, using one or more control valves in fluid communication with one or more exhaust ports the air logic valves, the flow of fluid exhausting from the one or more exhaust ports of the air logic valves. In some embodiments, the air logic valves comprise throttle valves.

In some or all embodiments, the air logic valves can be multi-direction flow control valves each configured to receive a pneumatic power, to receive a forward pneumatic signal from the air logic control system and to receive a reverse pneumatic signal from the air logic control system.

In some or all embodiments, the multi-direction flow control valves can provide the pneumatic power to a forward input of the pneumatic motors upon receiving the forward pneumatic signal and can provide the pneumatic power to a reverse input of the pneumatic motors upon receiving the reverse pneumatic signal.

In some or all embodiments, the air logic control system can comprise shuttle valves in fluid communication with the air logic valves, a user input assembly and a pneumatic source.

In some or all embodiments, the user input assembly can comprise mechanically actuatable valves that provides pneumatic signals to the air logic valves.

In some or all embodiments, the user input assembly can comprise one or more shuttle valves that are in fluid communication with the mechanically actuatable valves and the air logic valves. The shuttle valves can be configured to control the pneumatic signals provided to the air logic valves. In some embodiments, one or more control valves are in fluid communication with one or more exhaust ports of the shuttle valves in fluid communication with the pneumatic motors. In some embodiments, one or more regulators are in the incoming pneumatic power line.

In some or all embodiments, the air logic valves can be multi-direction flow control valves each configured to receive a pneumatic power, to receive a forward pneumatic signal from the air logic control system and to receive a reverse pneumatic signal from the air logic control system.

In some or all embodiments, the multi-direction flow control valves can provide the pneumatic power to a forward input of the pneumatic motors upon receiving the forward pneumatic signal from a forward shuttle valve and can provide the pneumatic power to a reverse input of the pneumatic motors upon receiving the reverse pneumatic signal from a reverse shuttle valve.

Some or all embodiments of the present technology can include a main pneumatic switch in fluid communication with the pneumatic motors. The main pneumatic switch can be configured to control the pneumatic power from the pneumatic source to the multi-direction flow control valves.

Some or all embodiments of the present technology can include a main pneumatic switch in fluid communication with the pneumatic motors. The main pneumatic switch can be configured to control pneumatic power from a pneumatic source to the pneumatic motors.

In some or all embodiments, the air logic control system can be in fluid communication with the pneumatic motors by way of one or more static resistant hoses.

In some or all embodiments, the pneumatic motors can be low revolutions per minute (RPM), high torque pneumatic motors.

In some or all embodiments, the robotic crawler platform and the air logic control system can comply with explosive environmental standards.

In some or all embodiments, the wheels can be selected from the group consisting of omni-directional wheels, roller wheels, magnetic wheels, and drive wheels or sprockets associated with an endless track.

In some or all embodiments, the robotic crawler platform can include a frame configured to use the pneumatic motors, and a deck mountable to the frame.

In some or all embodiments, the wheels are three or more wheels.

In some or all embodiments, the pneumatic motors can be two or more pneumatic motors.

In some or all embodiments, the pneumatic motors can each be in fluid communication with an air logic valve that can include a pneumatic power input, a forward direction input, a forward direction output, a reverse direction input and a reverse direction output.

In some or all embodiments, each forward direction input can be in fluid communication with a forward shuttle valve of the air logic control system. Each reverse direction input can be in fluid communication with a reverse shuttle valve of the air logic control system.

Some or all embodiments of the present technology can include a fine adjustment control valve that can be in fluid communication with one or more of the pneumatic motors and any one of or any combination of a user input assembly, a forward shuttle valve and a reverse shuttle valve. The fine adjustment control valve can be configured to provide forward or reverse control signals to one or more pneumatic motors to provide a turning motion to the robotic crawler platform.

In some or all embodiments, the user input assembly can be one or more push button operated valves or a joystick operated valve.

In some or all embodiments, the robotic crawler platform can further include pneumatic throttle valves in fluid communication with any one of or any combination of the pneumatic motors and air logic valves that are in fluid communication with the pneumatic motors.

Some or all embodiments of the present technology can include a step of providing a pneumatic control signal to one or more of the pneumatic motors from the air logic control system based on the one or more user inputs.

Some or all embodiments of the present technology can include a step of providing pneumatic power to the pneumatic motors from a pneumatic main switch.

Some or all embodiments of the present technology can include a step of providing pneumatic power to the air logic control system from a pneumatic main switch.

In some or all embodiments, the air logic control system can comprise shuttle valves in fluid communication with air logic valves of the robotic crawler platform that are in fluid communication with the pneumatic motors.

Some or all embodiments of the present technology can include a step of providing pneumatic power to a forward input of the pneumatic motors upon receiving a forward pneumatic signal from a forward shuttle valve and providing the pneumatic power to a reverse input of the pneumatic motors upon receiving a reverse pneumatic signal from a reverse shuttle valve.

In some or all embodiments, the method further comprises the step of providing pneumatic power to said pneumatic motors from a pneumatic main switch.

In some or all embodiments, the air logic control system comprises shuttle valves in fluid communication with air logic valves of said robotic crawler platform that are in fluid communication with said pneumatic motors.

In some or all embodiments, the air logic valves are configured to provide pneumatic power to a forward input of said pneumatic motors upon receiving a forward pneumatic signal from a forward shuttle valve and to provide the pneumatic power to a reverse input of said pneumatic motors upon receiving a reverse pneumatic signal from a reverse shuttle valve.

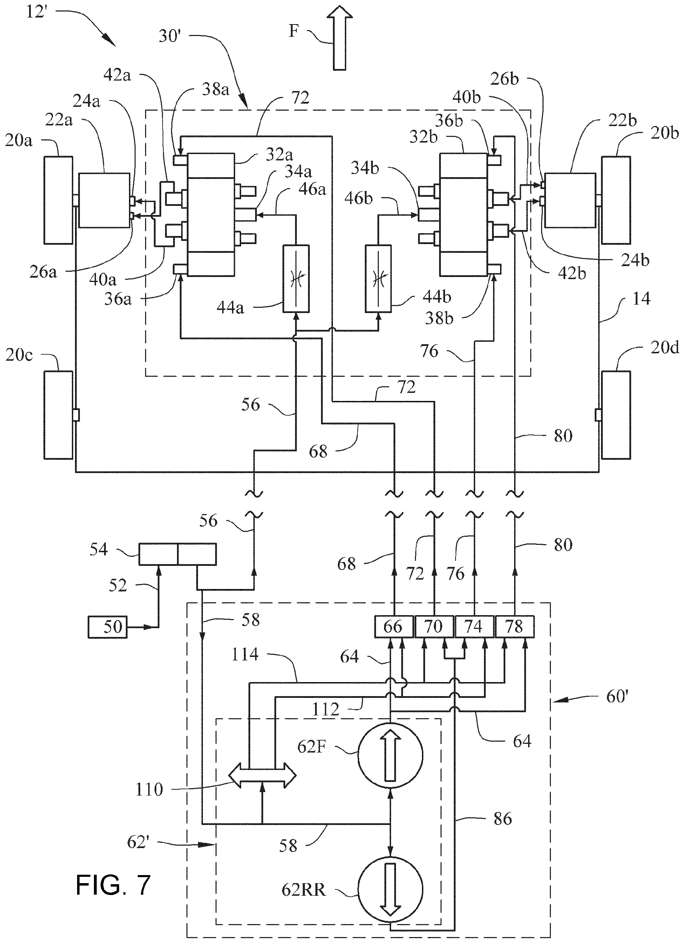

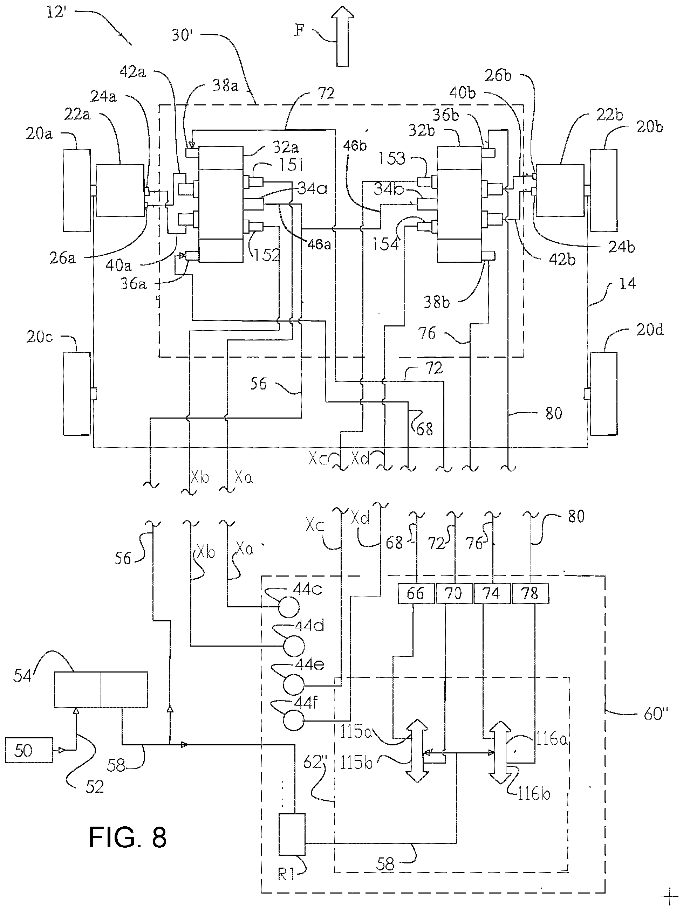

In some embodiments, the air logic control system and/or robotic crawler platform have controls configured to provide pressure and/or flow conditions for accurate direction and drive control of the crawler. In some embodiments, these flow/pressure controls are onboard the robotic platform to the motors and/or or exhaust controls plumed exhaust flow regulators from the air piloted shuttle valves. To this end, in some embodiments, a pressure regulator seen in Fig 8 and referenced as an R1 controls the incoming pressure to the motor that has a direct relationship to the speed of the motor rotations. There are other methods of controlling the speed with use of flow regulators as seen in Fig 7 and 8 as 44a-d. These flow controls restrict the amount of air passing through the hoses that in turn also impact the speed. If the flow control is on the incoming to the motor it can slow the motor, but the better use of the flow controls can be seen in Fig 8 as they are used in the exhaust. This is notable in that the system maintains pressure throughout the whole system and by regulating the exhaust limits the amount of air that can come into the motors.

According to one aspect, a method comprises providing a robotic crawler platform and air logic controls system of any of the embodiments described herein, controlling with the air logic control system the position of robotic crawler platform in an inspection zone in which there is explosive or potentially explosive conditions are present, and conducting tests/monitoring in the inspection zone using the robotic crawler platform and test/monitoring apparatus carried on said robotic crawler platform.

According to another aspect, there is provided a robotic crawler platform of any one of the embodiments of the robotic crawler platform described herein and/or method of operating such a robotic crawler platform.

According to another aspect, there is provided an air control logic system of any one of the embodiments of the air control logic system described herein and/or method of operating such an air control logic system.

According to another aspect, there is a provide a kit of parts comprising elements of any one or more of the embodiments of the robotic platform crawler and air logic control system mentioned herein, which elements when assembled, provide the robotic platform crawler and air logic control system. The kit of parts may include a box in which said elements are stored together with an instruction manual, the instruction manual providing instructions on how to assembly the elements together to provide said robotic platform crawler and air logic control system. According to yet some other embodiments of the present technology, there is provided an automated pneumatic remote controlled robotic crawler or nondestructive testing of hazardous environments. In some embodiments, automated static mitigating pneumatic remote controlled robotic crawler is disclosed for non-destructive testing of hazardous environments is provided. In some embodiments, the automated low to no-static pneumatic remote controlled robotic crawler comprises multi-directional flow control valves for flow through hoses to independent pneumatic motors attached to four independent rotary motors connected to omnidirectional wheels interchangeable with direct drive wheels when increased traction is required.

According to some embodiments, the automated low-static pneumatic remote controlled robotic crawler for nondestructive testing of hazardous environments comprises: a crawler main base unit; a top plate disposed above the crawler main unit made of anti-static polymer; axle bushings; a base block for controls; four independent omnidirectional Mecanum wheels attached to the crawler main unit via the axle bushings; pneumatic motor to power the movement; a frame to which the components attach; a plurality of valves, hoses; and a joystick manipulation control system dispensed through four four-way solenoid control system to control flow from the pneumatic motor to the omnidirectional wheels.

There has thus been outlined, rather broadly, features of the present technology in order that the detailed description thereof that follows may be better understood and in order that the present contribution to the art may be better appreciated.

Numerous objects, features, and advantages of one or more embodiments of the present technology will be readily apparent to those of ordinary skill in the art upon a reading of the following detailed description of the present technology, but nonetheless illustrative, embodiments of the present technology when taken in conjunction with the accompanying drawings.

As such, those skilled in the art will appreciate that the conception, upon which this disclosure is based, may readily be utilized as a basis for the designing of other structures, methods and systems for carrying out the several purposes of the present technology. It is, therefore, that the claims be regarded as including such equivalent constructions insofar as they do not depart from the spirit and scope of the present technology.

It is therefore an object of one or more of the embodiments of the present technology to provide a new and novel robotic crawler platform system and method that may have the advantages of the known pneumatic robots' pneumatic controllers and omit at least one or more of the disadvantages.

It is another object of one or more embodiments of the present technology to provide a new and novel robotic crawler platform system and method that may be easily and efficiently manufactured and marketed.

An even further object of one or more embodiments of the present technology is to provide a new and novel non-electric robotic crawler platform system and method that has a low cost of manufacture with regard to both materials and labor, and which accordingly is then susceptible of low prices of sale to the consuming public, thereby making such non-electric robotic crawler platform system and method economically available to the buying public.

Still another object of one or more embodiments of the present technology is to provide a new robotic crawler platform system and method that provides in the apparatuses and methods of the known pneumatic robots some of the advantages thereof, while simultaneously overcoming some of the disadvantages normally associated therewith.

These together with other objects of one or more embodiments of the present technology, along with the various features of novelty that characterize the present technology, are pointed out with particularity in the claims annexed to and forming a part of this disclosure. For a better understanding of the one or more embodiments of the present technology, its operating advantages and the specific objects attained by its uses, reference should be made to the accompanying drawings and descriptive matter in which there are illustrated embodiments of the present technology. Whilst multiple objects of the present technology have been identified herein, it will be understood that the claimed present technology is not limited to meeting most or all of the objects identified and that one or more embodiments of the present technology may meet only one such object or none at all.

### BRIEF DESCRIPTION OF THE DRAWINGS

The one or more embodiments of the present technology will be better understood and objects other than those set forth above will become apparent when consideration is given to the following detailed description thereof. Such description makes reference to the annexed drawings wherein:
FIG. 1 is a block diagram of one embodiment of the present technology including the non-electric robotic crawler platform and the non-electric air logic control system.
FIG. 2 is an enlarged perspective cutaway view of the non-electric robotic crawler platform system shown in an exemplary use in enclosed spaces within a steel storage tank. The system can also be used in many other applications where confined spaces and/or hazardous environments.
FIG. 2B is an enlarged perspective cutaway view of the non-electric robotic crawler platform system shown in an exemplary use in enclosed spaces within a steel storage tank according to some embodiments;
FIG. 3 is a perspective view of the robotic crawler platform of one or more embodiments of the present technology.
FIG. 4 is a cross-sectional view of the robotic crawler platform with the deck attached thereto and includes omni-direction wheels.
FIG. 5 is a block diagram of the robotic crawler platform, the pneumatic or air source, the control box and the main air switch of one or more embodiments of the present technology. Button sequence controller configuration. Two-lever controller is an option (not represented in this drawing). Block diagram represents on robot exhaust, but exhaust return to control box is another option with flow regulators for remote speed control (not illustrated).
FIG. 6 is a block diagram of the four pneumatic motor robot platform and the air logic control system of one or more embodiments of the present technology.
FIG. 7 is a block diagram of the two pneumatic motor robot platform and the air logic control system of one or more embodiments of the present technology.
FIG. 8 is a block diagram of the two pneumatic motor robot platform and an air logic control system of some embodiments of the present technology.
FIG. 9 is a block diagram showing possible directional motion of the robotic crawler platform and the rotational direction of the wheels as driven by their corresponding motor using air logic control systems of some of the embodiments.
FIG. 10 is a top perspective view of a crawler according to some embodiments for a pneumatic crawling robot according to another aspect of the present technology.
FIG. 11 is front perspective view of the crawler of FIG. 10.
FIG. 12 is a table listing components according to some embodiments for the crawler of FIG. 11.
FIG. 13 is the base plate according to some embodiments for the crawler of FIG. 11.
FIG. 14 is the top plate according to some embodiments for the crawler of FIG. 11.
FIG. 15 is the axle bushing according to some embodiments for the crawler of FIG. 11.
FIGS. 16 are views of mecanum wheel sub-assembly according to some embodiments for the crawler of FIG. 11.
FIG. 17 is a view of the mecanum wheel sub-assembly of FIG. 16 with the axle bushing.
FIG. 18 is a partial view of the mecanum wheel sub-assembly of FIG. 17 and illustrating the axle bushing.
FIG. 19 is a view of the shaft of the motor sub-assembly according to some embodiments for the crawler of FIG. 11.
FIG. 20 is the back side of the motor sub-assembly of FIG. 20.
FIG. 21 is a partial view illustrating the motor sub-assembly of FIG. 19 mounted to the frame for the crawler of FIG. 11.
FIG. 22 is a view illustrating 4 motor sub-assemblies according to some embodiments mounted to the frame for the crawler of FIG. 11.
FIGS. 23 to 25 illustrate different partial views of the mounted Mecanum wheel sub-assemblies for the crawler of FIG. 11.
FIG. 26 illustrates a view from the top of the mecanum drive showing the wheels of the mounted Mecanum wheel sub-assemblies for the crawler of FIG. 11.
FIG. 27 illustrates possible configurations of the mecanum drive of FIG. 26;
FIG. 28 illustrates the top plate of FIG. 14 mounted to the mecanum drive of FIG. 26 for hose management.
FIG. 29 is a partial view illustrating tube holders according to some embodiments mounted to the assembly of FIG. 28 for hose management.
FIG. 30 is a partial view illustrating accessory plates according to some embodiments mounted to the assembly of FIG. 28 for hose management.
FIG. 31 illustrates the routing according to some embodiments for tubes pushed into the tube holders of FIG. 29.
FIG. 32 is a table of a control assembly according to some embodiments for controlling the crawler of FIG. 11.
FIG. 33 illustrates valves according to some embodiments for the control assembly for controlling the crawler of FIG. 11.
FIG. 34 illustrates the valves of FIG. 33 assembled to a base block for controls according to some embodiments for controlling the crawler of FIG. 11.
FIG. 35 illustrates a partial view of the assembly of FIG. 34.
FIG. 36 illustrates another view of the assembly of FIG. 34.
FIG. 37 illustrates an alternative control assembly according to some embodiments for controlling the crawler of FIG. 11.
FIG. 38 is a table listing tubes and compress gas connections according to some embodiments for the crawler of FIG. 11.
FIG. 39 is a table listing flow control components according to some embodiments for the crawler of FIG. 11.
FIG. 40 is a flow control valve according to some embodiments for the pneumatic crawling robot of FIG. 11.
FIG. 41 is a quick exhaust valve according to some embodiments for the pneumatic crawling robot of FIG. 11.
FIGS. 42 and 43 illustrate respective views of a prototype of the crawler of FIG. 11 according to some embodiments.
FIG. 44 is a schematic and corresponding table illustrating Mecanum wheels and directional control sequencing according to some embodiments for the crawler of FIG. 11; and
FIG. 45 is a schematic diagram of a controller according to some embodiments for controlling the crawler of FIG. 11.

The same reference numerals refer to the same parts throughout the various figures.

### DETAILED DESCRIPTION OF THE EMBODIMENTS

In the following description, for purposes of explanation and not limitation, specific details are set forth, such as particular embodiments, procedures, techniques, etc. in order to provide a thorough understanding of one or more embodiments of the present technology. However, it will be apparent to one skilled in the art that one or more embodiments of the present technology may be practiced in other embodiments that depart from these specific details.

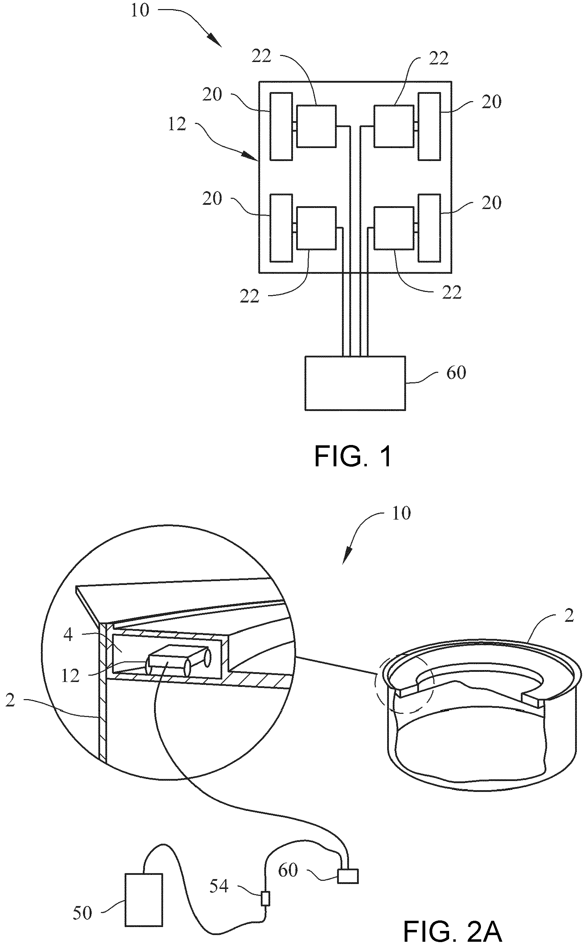

Referring now to the drawings, and particularly to FIGS. 1-8, one or more embodiments of the non-electric robotic crawler platform system and method of the present technology is shown and generally designated by the reference numeral 10.

Referring to FIG. 1, a new and novel non-electric robotic crawler platform system and method **10** of the present technology for logically controlling a pneumatically driven multidirectional multi-motor crawler platform is illustrated and will be described. One or more embodiments of the present technology **10** can include a non-electric robotic crawler platform **12** and a non-electric air logic control system **60.** The robotic crawler platform **12** can include wheels **20** and pneumatic motors **22,** where the pneumatic motors **22** are connected to the wheels **20.** The air logic control system **60** can be in fluid communication with the pneumatic motors **22.**

The robotic crawler platform **12**, the pneumatic motors **22** and the air logic control system **60** are non-electric. Further, the robotic crawler platform **12** and the air logic control system **60** are made from materials having anti-static or static dispersive properties.

It can be appreciated that a user can provide motion control input to the air logic control system **60** to control directional motion of the robotic crawler platform **12** by controlling any one of or any combination of the pneumatic motors **22** in either a forward or reverse rotational direction.

It can further be appreciated that any suitable number of wheels, 20, can be utilized, and any suitable number of pneumatic motors **22** can be utilized to provide any desired directional control. It can be further appreciated that a total number of wheels **20** does not have to correspond with a total number of the pneumatic motors **22.** It can still further be appreciated that the motors **22** can be in any operable connection to the wheels **20** such as, but not limited to, direct or indirect connection via a shaft, a gear reduction system, a pulley system, a magnetic system or any other suitable means of providing rotational motion to the wheels.

As stated above, confined space entry and hazardous fumes present costly and dangerous risks for industry and inspectors. Static discharge concerns need mitigation while presenting access to difficult to access locations. In the exemplary, one or more embodiments of the preset technology for non-destructive testing of hazardous environments described herewith solve such problems by a pneumatic remote-controlled solution for inspection by a low to no-static robotic crawler platform **12.** Pneumatic remote-controlled solutions may elevate utility and present a way to the necessary inspection in a safe and automated way through low to no-static robots.

Known pneumatically powered robots or platform vehicles have been used in assembly/production, but often with electric solenoid controls. One or more embodiments of the present technology can overcome at least this disadvantage in the total use of air logic sequencing from mechanical positioning controls in the air logic control system **60** then traveling through to the pneumatic motors **22** in a means to ensure adequate exhausting and distribution.

One advantage of one or more embodiments of the present technology is in its non-electric, entirely pneumatic controls through air logic. This allows for one of the primary components for an explosion, which being an ignition source, to be mitigated where flammable gasses and/or liquids are present. Another advantage of one or more embodiments of the present technology is that the robotic crawler platform **12** is sized for confined spaces, which is normally inspected with human entry.

In particular, some or all embodiments of the present technology can replace the need for humans to enter confined spaces to conduct inspections. This is dangerous for the asset and the human (fumes, etc.). Also, electric motors and static discharging materials are of great concern. One or more embodiments of the present technology introduces movement without discharge potential by way of the pneumatic motors **22.** The pneumatic motors **22** can be, but not limited to, high torque, low revolutions per minute (RPM) pneumatic motors. In the exemplary, the pneumatic motors **22** can be configured or operated to provide a minimum speed controlled to be below thresholds in the potential for impact ignition. Speed can also be managed via incoming pressure regulators and/or exhaust control.

In addition, one or more embodiments of the present technology improve upon the currently existing options by eliminating the use of electric motors and/or electric solenoids which, in and around static discharging materials, are of great concern. Specifically, static discharge in electric motors and solenoids is a highly dangerous possibility with the existing options. Add these concerns to the existing human safety concerns (fumes, etc.) and it can be appreciated that the existing inspection process done with humans in small spaces is too dangerous for both human and assets being inspected, due to the potential electric discharge by electronic motor movements. One or more embodiments of the present technology introduces movement without discharge potential and can potentially be utilized for more frequent and varied deployments as some of the extra cleaning processes save time/money. In some or all of the embodiments, the present technology brings the human back in a data review mode versus direct access.

Still further, one or more embodiments of the present technology can be configured to comply with, but not limited to, IEC 60079-0, EN IEC 60079-0, IEC ISO 80079-36, EN ISO 80079-36, IEC ISO 80079-37, EN ISO 80079-37 and/or ISO/IEC 80079-34 standards.

A need exists for a new and novel non-electric robotic crawler platform system and method **10** that can be used for logically controlling a pneumatically driven multidirectional multi-motor crawler platform. In this regard, one or more embodiments of the present technology substantially fulfills this need. In this respect, the non-electric robotic crawler platform system and method according to one or more embodiments of the present technology substantially departs from the conventional concepts and designs of known systems, and in doing so provides an apparatus primarily developed for the purpose of logically controlling a pneumatically driven multidirectional multi-motor crawler platform.

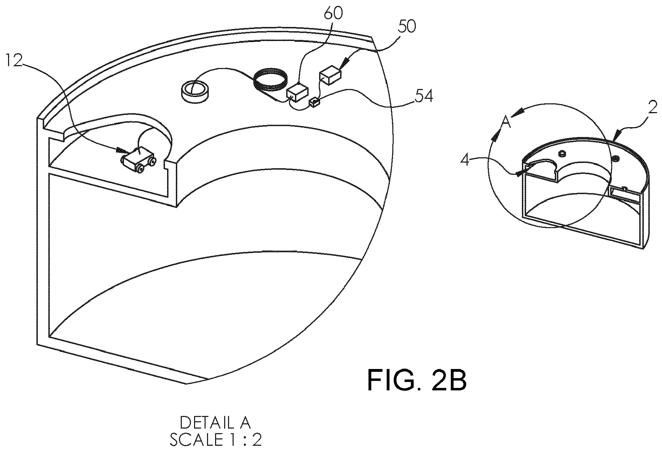

In FIG. 2, one or more embodiments of the present technology 10 can be utilized in providing and/or controlling the non-electric robotic crawler platform **12** in a confined space **4** of a structure or building **2.** In the exemplary, the structure or building can be a storage tank **2**, and the confined space **4** can be a Zone 0 or 1 space. The robotic crawler platform **12** can include wheels **20** and the pneumatic motors **22** operably connected to the wheels **20** in a configuration capable of operation in a confined spaced, as best illustrated in FIG. 2.

The robotic crawler platform **12** and the air logic control system **60** can include any other static mitigating components or means in combination with the anti-statice or static dispersive material.

One or more embodiments of the present technology can further include a pneumatic source **50** and a main pneumatic switch **54.** The pneumatic source **50** can be, but not limited to, an air pump, an air compressor, a pressurized air storage tank or any suitable source of air. The pneumatic source **50** can be in fluid communication with the main pneumatic switch **54,** which can provide the pneumatic power such as, but not limited, pressurized air to the air logic control system **60** to provide pressurized air thereto. It can be appreciated that one or more of the embodiments of the present technology can utilize pressurized hydraulic instead of air.

One or more embodiments of the present technology can further include the pneumatic source **50** in fluid communication with the main pneumatic switch **54** and the air logic control system **60.**

The robotic crawler platform **12,** the main pneumatic switch **54** and the air logic control system **60** can all be non-electric, where no electrical power is provided thereto and/or transmitted therefrom, thereby complying with Zone 0 or 1 requirements. Even further, the robotic crawler platform **12,** the main pneumatic switch **54** and the air logic control system **60** can all be made from or with statice dispersive or anti-static materials.

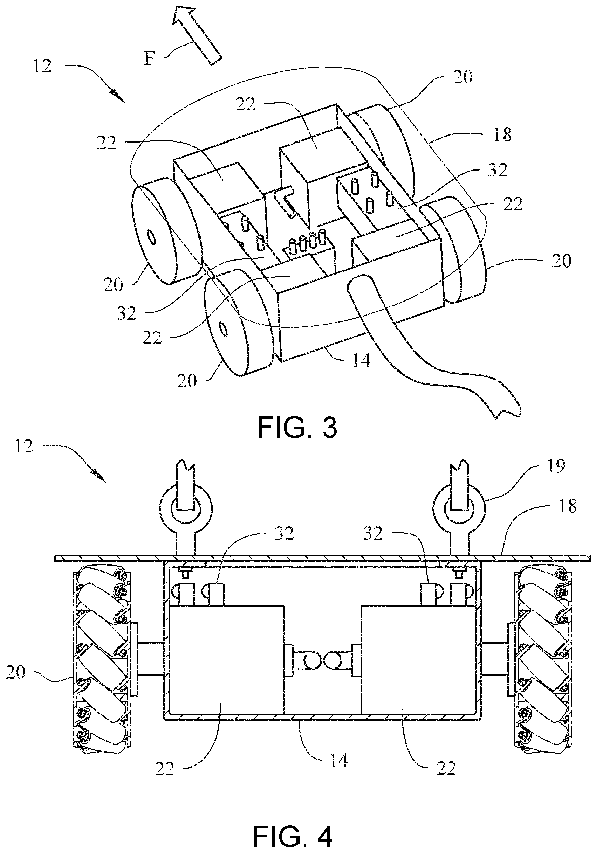

Referring to FIGS. 3-5, the robotic crawler platform **12** can include wheels **20** and a pneumatic motor **22** operably connected to at least one of the wheels **20.** It can be appreciated that any number of wheels **20** and/or pneumatic motors **22** can be utilized in one or more embodiments of the present technology. It can further be appreciated that the wheels **20** can be, but not limited to, an omni-directional wheel (as best illustrated in FIG. 4), a roller wheel, a magnetic wheel, or a drive wheel or sprocket associated with an endless track. A robot frame **14** can be utilized to support the wheels **20** and the pneumatic motor **22** and can house a pneumatic control system **30** associated with the robotic crawler platform **12.**

The pneumatic control system **30** can include any pneumatic component suitable for operation of the pneumatic motors such as, but not limited to, air logic valves **32**, throttle valves or any other suitable pneumatic control devices. It can be appreciated that one or more embodiments of the present technology can include the air logic valves **32** being remote from the robotic crawler platform **12** and connected to the pneumatic motors **22** by way of suitably length hoses.

The robotic crawler platform **12** can move in all directions by operating any one of or any combination of the pneumatic motors **22.** The wheels **20** can be executed with magnetic rollers which will provide grip to the rollers on a metallic surface, such as those associated with the confined space **4** of the steel tank **2.**

A deck **18** can be attachable to the frame **14** to provide a support platform for additional equipment, tools, inspection components and the like. The deck **18** can be attached by or can include eye bolts or loops **19** that are capable of receiving straps that can be utilized to carry the robotic crawler platform **12.**

The robotic crawler platform **12** can be equipped with a pneumatic actuator or cylinder (not shown) on which various tools can be mounted. These tools can be, but not limited to, inspection tools, sensor systems, ultrasonic (UT) sensor systems, thickness measurement devices, welding equipment or cameras. Additional control inputs can be utilized with the air logic control system **60** to provide pneumatic signals to the pneumatic actuator and/or the tool. It can be appreciated that all components of the robotic crawler platform **12** and any payload or tool associated with the robotic crawler platform **12** can have their own individual ATEX or EX approval.

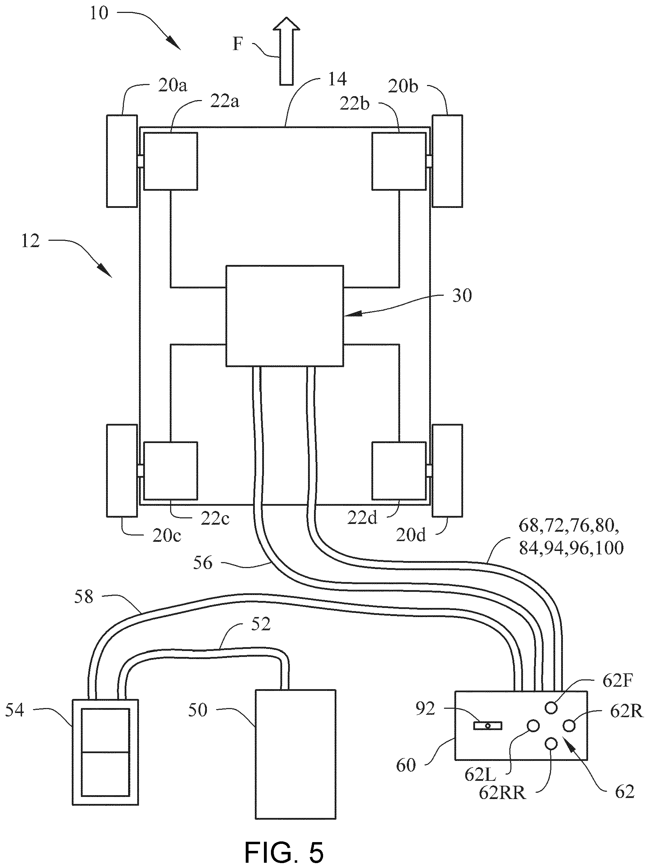

Referring to FIG. 5, one or more embodiments of the present technology can utilize user inputs provided to the air logic control system **60** that would accordingly provide pneumatic signals to the pneumatic control system **30** which controls pressurized air from the pneumatic source **50** to any one of or any combination of the pneumatic motors **22**, which thus drives their corresponding wheel **20.**

The user can input desired motion control of the robotic crawler platform **12** to the air logic control system **60** by way of non-electric inputs such as, but not limited to, buttons, levers, joysticks, knobs and the like.

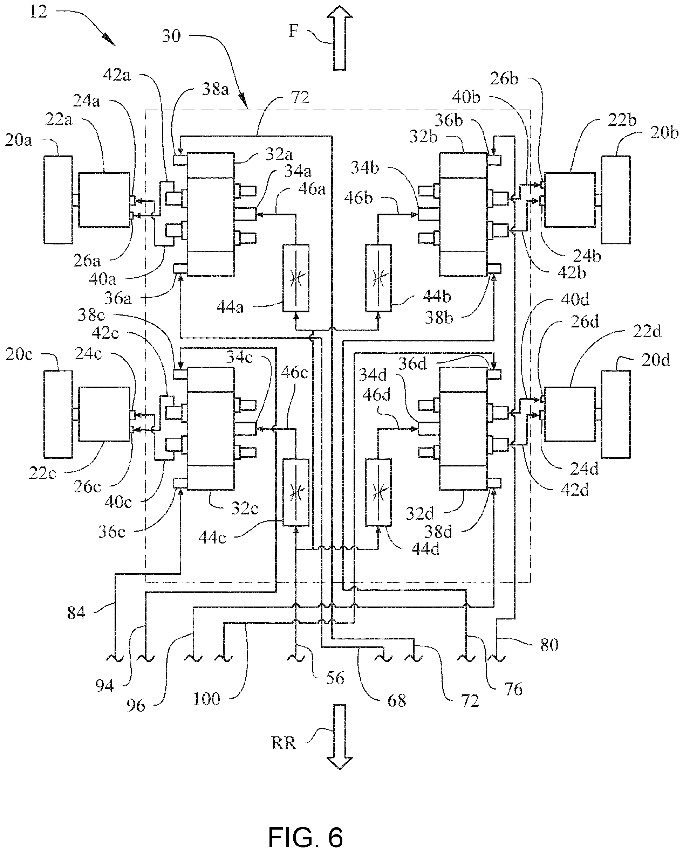

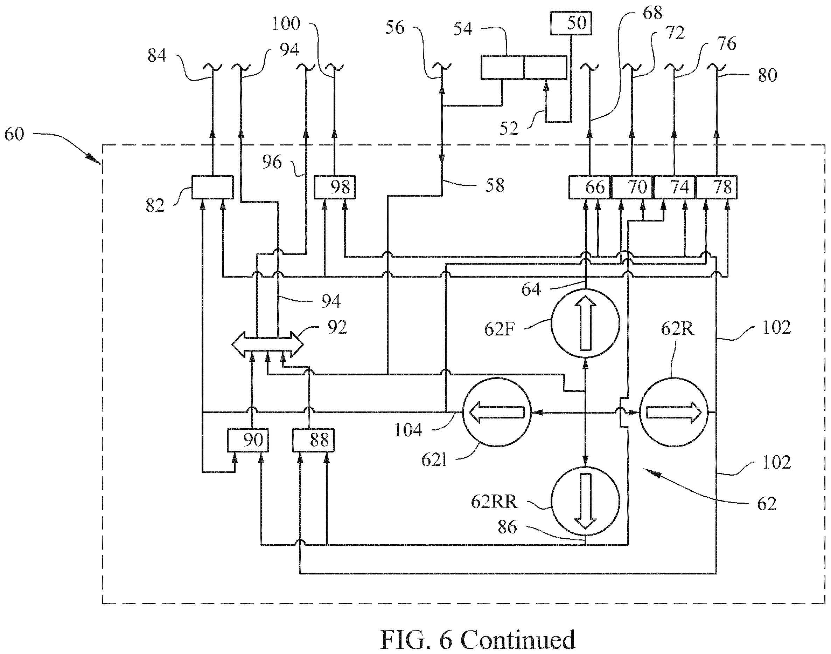

Referring to FIG. 6, a non-limiting example of the robotic crawler platform **12** including four pneumatic motor driven wheels is illustrated and described. However, other wheel and pneumatic motor configurations can be implemented in the scope of the present technology. In this embodiment, the robotic crawler platform **12** can include four wheels **20a, 20b, 20c, 20d,** each connected to a pneumatic motor **22a, 22b, 22c, 22d.** Each pneumatic motor **22a, 22b, 22c, 22d** includes a forward direction input **24a, 24b, 24c, 24d** and a reverse direction input **26a, 26b, 26c, 26d.** The first pneumatic motor **22a** being a front-left side motor, the second pneumatic motor **22b** being a front-right side motor, the third pneumatic motor **22c** being a rear-left side motor and the fourth pneumatic motor **22d** being a rear-right side motor. It can be appreciated that the second and fourth pneumatic motors **22b, 22d** are inversely orientated as to the first and third pneumatic motors **22a, 22c.** With this in mind, the first and third pneumatic motors **22a, 22c** and the second and fourth pneumatic motors **22b, 22d** are oriented on the robotic crawler platform **12** so that they provide operable rotational direction of their corresponding wheels **20a, 20b, 20c, 20d.**

Sequencing for desired directional control can be summarized in the simplified flow progression from control box **60** to crawler **10** can be seen in Table 1 and correspond with flow diagram in Figure 6.

**Table 1**

| Communication signal sequences for directional controls (Fig 6) | | | | | | |
|---|---|---|---|---|---|---|
| **Motor** | **Directional Input Line** | **Input Port** | **Motor Input Line** | **Motor Input Port** | **Motor Direction** | **Platform Direction** |
| 22a | 72 | 38a | 42a | 26a | Reverse | Reverse |
| **22a** | **68** | **36a** | **40a** | **24a** | **Forward** | **Forward** |
| **22b** | **80** | **36b** | **40b** | **26b** | **Reverse** | **Forward** |
| 22b | 76 | 38b | 42b | 24b | Forward | Reverse |
| 22c | 94 | 38c | 42c | 26c | Reverse | Reverse |
| **22c** | **84** | **36c** | **40c** | **24c** | **Forward** | **Forward** |
| **22d** | **100** | **36d** | **40d** | **26d** | **Reverse** | **Forward** |
| 22d | 96 | 38d | 42d | 24d | Forward | Reverse |

For example, to move the robotic crawler platform **12** forward, the forward direction input **24a, 24c** of the first and third pneumatic motors **22a, 22c,** and the reverse direction input **26b, 26d** of the second and fourth pneumatic motors **22b, 22d** are operated.

The air logic valves **32** can be, but not limited to, air piloted valves or multi-direction flow control valves **32a, 32b, 32c, 32d** that can be in fluid communication with the forward direction input **24a, 24b, 24c, 24d** and the reverse direction input **26a, 26b, 26c, 26d.** These multi-direction flow control valves **32a, 32b, 32c, 32d** can receive pneumatic control signals from the air logic control system **60** to control the motive rotational direction of the motors **22a-d,** respectively, thereby moving the robotic crawler platform **12** in a desired direction. These flow control valves **32a-d** can act as switches that manage an input from the air logic control system **60** that sequences the pneumatic power to the forward direction inputs **24a, 24b, 24c, 24d** and the reverse direction inputs **26a, 26b, 26c, 26d** on the motors **22a, 22b, 22c, 22d,** respectively.

A first and third motor forward direction output **40a, 40c** of the multi-direction flow control valve **32a, 32c** can be connected to the forward direction input **24a, 24c** of the first and third pneumatic motors **22a, 22c,** and a first and third reverse direction output **42a, 42c** can be connected to the reverse direction input **26a, 26c** of the first and third pneumatic motors **22a, 22c,** respectively. It can be appreciated that one or more embodiments of the present technology can include the first and third motor forward direction outputs **40a, 40c** with lengths allowing for their corresponding flow control valves **32a, 32c** to be remote from the robotic crawler platform **12.**

Inversely to the above, a second and fourth motor forward direction output **40b, 40d** of the flow control valve **32b, 32d** can be connected to the reverse direction input **26b, 26d** of the second and fourth pneumatic motors **22b, 22d,** and a second and fourth reverse direction output **42b, 42d** can be connected to the forward direction input **24b, 24d** of the second and fourth pneumatic motors **22b, 22d,** respectively. It can be appreciated that one or more embodiments of the present technology can include the second and fourth motor forward direction outputs **40b, 40d** with lengths allowing for their corresponding flow control valves **32b, 32d** to be remote from the robotic crawler platform **12.**

Each flow control valve **32a, 32b, 32c, 32d** can include a forward signal input **36a, 36b, 36c, 36d** and a reverse signal input **38a, 38b, 38c, 38d,** utilized to receive pneumatic control signals from the air logic control system **60** to control which of the forward direction output **40a, 40b, 40c, 40c** or the reverse direction output **42a, 42b, 42c, 42d** is activated or opened.

In an idle operation, the pneumatic power from the main pneumatic switch **54** is prevented from passing to the any of the direction inputs **24a-d, 26a-d** of the pneumatic motor **22a-d** until a pneumatic signal is received in one of the forward signal inputs **36a-d** or the reverse signal inputs **38a-d** from the air logic control system **60.** In operation, the pneumatic power is allowed to pass to either the forward direction inputs **24a-d** or the reverse direction inputs **26a-d** of the pneumatic motors **22a-d** depending on which of the forward signal inputs **36a-d** or the reverse signal inputs **38a-d** receives a pneumatic signal.

The flow control valves **32a, 32b, 32c, 32d** can be, but not limited to, 5-way three position (left, right, neutral) valves that can control the pneumatic power going into either the forward direction input **24a, 24b, 24c, 24d** or the reverse direction input **26a, 26b, 26c, 26d** of their respective pneumatic motors **22a, 22b, 22c, 22d** based on the pneumatic signal received by either the forward signal input **36a, 36b, 36c, 36d** or the reverse signal input **38a, 38b, 38c, 38d.**

Pneumatic power utilized to drive the pneumatic motors **22a, 22b, 22c, 22d** can be received through a main pneumatic input **34a, 34b, 34c, 34d** of the flow control valves **32a, 32b, 32c, 32d** provided by the pneumatic source **50** by way of the main pneumatic switch **54.** When the main pneumatic switch **54** is not activated, the pneumatic power is not allowed to pass through the pneumatic switch **54,** thereby preventing the pneumatic motors **24a-d** and/or the air logic control system **60** from being operated. Exhaust ports can be utilized in each of the flow control valves **32a, 32b, 32c, 32d** to allow air exiting the pneumatic motors **22a, 22b, 22c, 22d** to escape.

A pneumatic throttle valve **44a, 44b, 44c, 44d** can be utilized to control the pneumatic power to each of the main pneumatic inputs **34a, 34b, 34c, 34d.** Each throttle valve **44a, 44b, 44c, 44d** can be connected to each the main pneumatic inputs **34a, 34b, 34c, 34d** by way of a throttle line **46a, 46b, 46c, 46d.** The pneumatic throttle valve **44a, 44b, 44c, 44d** can be, but not limited to a speed controller or pneumatic flow control valve that can be used for controlling the operation speed of pneumatic motor **22a, 22b, 22c, 22d.** The flow rate of air or hydraulic from an input side to an output side of the throttle valves **44a-d** can be controlled.

The main pneumatic switch **54** can receive pneumatic power directly from the pneumatic source **50** by way of line **52,** and then output the pneumatic power to the throttle valves **44a-d** by way of line **56.** In the exemplary, the pneumatic power line **56** from the main pneumatic switch **54** to the robotic crawler platform **12** can be, but not limited to, a static resistant 6 mm hose or line. The main pneumatic switch **54** can be, but not limited to, a foot operated pedal, a hand operated lever, a push button or any user operated device that can stop or allow the pneumatic power to pass therethrough.

The air logic control system **60** is in fluid communication with each of the flow control valves **32a, 32b, 32c, 32d** and the throttle valves **44a, 44b, 44c, 44d,** and can include a user input assembly **62** allowing a user to control the movement and/or operation of the robotic crawler platform **12.**

The pneumatic power from the main pneumatic switch **54** can be further provided to the user input assembly **62** and to an optional fine adjustment control valve **92** by way of line **58.** It can thus be appreciated that the pneumatic source **50** provides the pneumatic power that operates each of the pneumatic motors **22a, 22b, 22c, 22d** as well as to the air logic control system **60** by way of the main pneumatic switch **54.**

Alternatively, the pneumatic power from the pneumatic source **50** can be provided directly to the user input assembly **62** and to the optional fine adjustment control valve **92** by way of the line **58,** which can by-pass the man pneumatic switch **54.** It can thus be appreciated that the pneumatic source **50** provides the pneumatic power that operates each of the pneumatic motors **22a, 22b, 22c, 22d** as well as to the air logic control system **60.**

The user input assembly **62** can be, but not limited to, one or more buttons or a joystick capable of controlling the pneumatic control signals to the flow control valves **32a, 32b, 32c, 32d.** In the exemplary, the user input assembly **62** will herein be described as a four-button system including a forward button **62F,** a right button **62R,** a reverse button **62RR** and a left button **62L.** It can be appreciated that this configuration can be implemented with a joystick or any other mechanically controlled valves. The buttons **62F, 62R, 62RR, 62L** can be, but not limited to, 3-way two position (neutral, open) button-controlled valves. It can be appreciated that the user input assembly **62** can provide the pneumatic control signal to one or more appropriate motor shuttle valves to provide the desired motion of the robotic crawler platform **12.** A shuttle valve can be a type of valve which allows fluid to flow through it from one of two sources. The desired motion can be a forward direction as indicated by the arrow **F,** a right direction, a reverse direction indicated by the arrow **RR** and a left direction. All directions can be provided by controlling the forward or reverse operation of any one of or any combination of the first pneumatic motor **22a,** the second pneumatic motor **22b,** the third pneumatic motor **22c** and the fourth pneumatic motor **22d.**

The forward control button **62F** can receive the pneumatic power from line **58** and upon activation provide a forward motion pneumatic control signal, by way of lines **64,** to a first motor forward shuttle valve **66,** a second motor forward shuttle valve **78,** a third motor forward shuttle valve **82** and a fourth motor forward shuttle valve **98.**

The pneumatic control signal from the first motor forward shuttle valve **66** is provided to the forward signal input **36a** of the first motor flow control valve **32a** by way of line **68,** consequently providing pneumatic power to the forward direction input **24a** of the first motor **22a** (forward rotational direction).

The pneumatic control signal from the second motor forward shuttle valve **78** is provided to the reverse signal input **38b** of the second motor control valve **32b** by way of line **80,** consequently providing pneumatic power to the reverse direction input **26b** of the second motor **22b** (forward rotational direction). Further, the pneumatic control signal from the third motor forward shuttle valve **82** is provided to the forward signal input **36c** of the third motor flow control valve **32c** by way of line **84,** consequently providing pneumatic power to the forward direction input **24c** of the third motor **22c** (forward rotational direction). Still further, the pneumatic control signal from the fourth motor forward shuttle valve **98** is provided to the forward signal input **36d** of the fourth motor flow control valve **32d** by way of line **100,** consequently providing pneumatic power to the reverse direction input **26d** of the fourth motor **22d** (forward rotational direction).

The right button **62R** can receive the pneumatic power from line **58** and upon activation provide a right motion pneumatic control signal, by way of lines **102,** to the first motor forward shuttle valve **66,** a second motor reverse shuttle valve **74,** a third motor reverse shuttle valve **88** and the fourth motor forward shuttle valve **98.**

The pneumatic control signal from the first motor forward shuttle valve **66** is provided to the forward signal input **36a** of the first motor flow control valve **32a** by way of line **68,** consequently providing pneumatic power to the forward direction input **24a** of the first motor **22a** (forward rotational direction).

The pneumatic control signal from the second motor reverse shuttle valve **74** is provided to the reverse signal input **38b** of the second motor flow control valve **32b** by way of line **76,** consequently providing pneumatic power to the reverse direction input **26b** of the second motor **22b** (reverse rotational direction).

The pneumatic control signal from the third motor reverse shuttle valve **88** is provided to the fine adjustment control valve **92,** which provides a pneumatic control signal to the reverse signal input **38c** of the third motor flow control valve **32c** by way of line **94,** consequently providing pneumatic power to the reverse direction input **26c** of the third motor **22c** (reverse rotational direction). It can be appreciated that pneumatic signals can pass through the fine adjustment control valve **92** without disruption unless operated.

The pneumatic control signal from the fourth motor forward shuttle valve **98** is provided to the reverse signal input **38d** of the fourth motor flow control valve **32d** by way of line 100, consequently providing pneumatic power to the reverse direction input **26d** of the fourth motor **22d** (forward rotational direction).

The fine adjustment control valve **92** can be a 5-way three position (left, right, neutral) valve controlled by a user activated left-right joystick or push buttons, which can be utilized to make fine left or right motion adjustments to the robotic crawler platform 12 by operating the third pneumatic motor **22C** and/or the fourth pneumatic motor **22d.**

The reverse control button **62RR** can receive the pneumatic power from line **58** and upon activation provide a reverse motion pneumatic control signal, by way of lines **86,** to a first motor reverse shuttle valve **70,** the second motor reverse shuttle valve **74,** the third motor reverse shuttle valve **88** and a fourth motor reverse shuttle valve **90.**

The pneumatic control signal from the first motor reverse shuttle valve **70** is provided to the reverse signal input **38a** of the first motor flow control valve **32a** by way of line **72,** consequently providing pneumatic power to the reverse direction input **26a** of the first motor **22a** (reverse rotational direction). Further, the pneumatic control signal from the second motor reverse shuttle valve **74** is provided to the reverse signal input **38b** of the second motor flow control valve **32b** by way of line **76,** consequently providing pneumatic power to the forward direction input **24b** of the second motor **22b** (reverse rotational direction).

The pneumatic control signal from the third motor reverse shuttle valve **88** is provided to the fine adjustment control valve **92,** which provides a pneumatic control signal to the reverse signal input **38c** of the third motor flow control valve **32c** by way of line **94,** consequently providing pneumatic power to the reverse direction input **26c** of the third motor **22c** (reverse rotational direction). It can be appreciated that pneumatic signals can pass through the fine adjustment control valve **92** without disruption unless operated.

The pneumatic control signal from the fourth motor reverse shuttle valve **90** is provided to the fine adjustment control valve **92,** which provides a pneumatic control signal to the reverse signal input **38d** of the fourth motor flow control valve 32d by way of line **96,** consequently providing pneumatic power to the forward direction input **24d** of the fourth motor **22d** (reverse rotational direction). It can be appreciated that pneumatic signals can pass through the fine adjustment control valve **92** without disruption unless operated.

It can be appreciated that a portion of the pneumatic control signal from the reverse button **62RR** is provided to both the third motor reverse shuttle valve **88** and the fourth motor reverse shuttle valve **90,** which is then provided to the fine adjustment control valve **92,** which is then provided to the reverse signal input **38c** of the third motor flow control valve **32c** by way of line **94** and to the reverse signal input **38d** of the fourth motor flow control valve **32d** by way of line **96.**

The left button **62L** can receive the pneumatic power from line **58** and upon activation provide a left motion pneumatic control signal, by way of lines **104,** to the first motor reverse shuttle valve **70,** the second motor forward shuttle valve **78,** the third motor forward shuttle valve **82** and the fourth motor reverse shuttle valve **90.**

The pneumatic control signal from the first motor reverse shuttle valve **70** is provided to the reverse signal input **38a** of the first motor flow control valve **32a** by way of line **42,** consequently providing pneumatic power to the reverse direction input **26a** of the first motor **22a** (reverse rotational direction).

The pneumatic control signal from the second motor forward shuttle valve **78** is provided to the forward signal input **36b** of the second motor flow control valve **32b** by way of line **80,** consequently providing pneumatic power to the forward direction input **24b** of the second motor **22b** (forward rotational direction).

The pneumatic control signal from the third motor forward shuttle valve **82 is** provided to the forward signal input **36c** of the third motor flow control valve **32c** by way of line **84,** consequently providing pneumatic power to the forward direction input **24c** of the third motor **22c** (forward rotational direction).

The pneumatic control signal from the fourth motor reverse shuttle valve **90** is provided to the fine adjustment control valve **92,** which provides a pneumatic control signal to the reverse signal input **38d** of the fourth motor flow control valve **32d** by way of line **96,** consequently providing pneumatic power to the forward direction input **24d** of the fourth motor **22d** (reverse rotational direction). It can be appreciated that pneumatic signals can pass through the fine adjustment control valve **92** without disruption unless operated.

With the above in mind, it can be appreciated that a four-motor robotic crawler platform can include at least eight motor shuttle valves **66, 70, 74, 78, 82, 88, 90, 98,** equaling to two shuttle valves per motor. It can be further appreciated that the motor shuttle valves can act as an OR logic switch, which only provides one pneumatic signal **68, 72, 76, 80, 84, 94, 96, 100** to their respective multi-direction flow control valves based on the position or operation of the user input assembly **62F, 62R, 62RR, 62L.** In the exemplary, the lines **68, 72, 76, 80, 84, 94, 96, 100** that provide the pneumatic signals to the robotic crawler platform **12** can be, but not limited to, a static resistant 4 mm hose or line.

As such, the air logic control system **60** can provide a forward or right pneumatic signal to the first motor forward signal input **36a** by way of the first motor forward shuttle valve **66,** and a reverse or left pneumatic signal to the first motor reverse signal input **38a** by way of the first motor reverse shuttle valve **70.**

The air logic control system **60** can provide a forward or left pneumatic signal to the second motor forward signal input **36b** by way of the second motor forward shuttle valve **78,** and a reverse or right pneumatic signal to the second motor reverse signal input **38b** by way of the second motor reverse shuttle valve **74.**

The air logic control system **60** can provide a forward or left pneumatic signal to the third motor forward signal input **36c** by way of the third motor forward shuttle valve **82,** and a reverse or right pneumatic signal to the third motor reverse signal input **38c** by way of the third motor reverse shuttle valve **88** and the fine adjustment control valve **92.**

The air logic control system **60** can provide a forward or right pneumatic signal to the fourth motor forward signal input **36d** by way of the fourth motor forward shuttle valve **98,** and a reverse or left pneumatic signal to the fourth motor reverse signal input **38d** by way of the fourth motor reverse shuttle valve **90** and the fine adjustment control valve **92.**

In use, it can now be understood that pneumatic power provided by the pneumatic source **50** can be supplied to the main pneumatic switch **54,** which can then provide the pneumatic power to the air logic control system **60** and to the pneumatic motors **22a-d.** It can be appreciated that the pneumatic motors **22a-d** and the air logic control system **60** will not operate unless the main pneumatic switch **54** is operated in combination with a pneumatic signal being provided to any one of or any combination of the flow control valve **32a-d** by the air logic control system **60.** Alternatively, the pneumatic power from the pneumatic source **50** can be supplied to the main pneumatic switch **54** and to the air logic control system **60** independently, with the pneumatic main switch **54** controlling the pneumatic power to the pneumatic motors **22a-d.**

Forward, right, reverse and left motion of the robotic crawler platform **12** can be controlled by the operation of the pneumatic motors **22a-d,** and more specifically by the providing of a pneumatic control signal to one of their respective forward direction input **24a-d** or reverse direction input **26a-d.** Table 2 provides a representation of some of the different motions capable of the robotic crawler platform **12** as compared with operation of its corresponding motor forward direction input **24a-d** or reverse direction input **26a-d.** The below table shows the sequencing of pneumatic power to its appropriate motor input, with the second and fourth motors **22b, 22d** being an inverse of the first and third motors **22a, 22c.** With this in mind, a forward motion of the second and fourth motors **22b, 22d** can be provided by supplying pneumatic power to their corresponding reverse inputs **26b, 26d.**

**Table 2**

| | 1st Motor Forward Input | 1st Motor Reverse Input | 2nd Motor Forward Input | 2nd Motor Reverse Input | 3rd Motor Forward Input | 3rd Motor Reverse Input | 4th Motor Forward Input | 4th Motor Reverse Input |
|---|---|---|---|---|---|---|---|---|
| Forward | X | | | X | X | | | X |
| Reverse | | X | X | | | X | X | |
| Right | X | | X | | | X | | X |
| Left | | X | | X | X | | X | |

The above representation provides a left or right motion that corresponds to a slide or crawl motion utilizing omni-directional wheels, which is substantially a motion perpendicular to a forward motion of the robotic crawler platform **12.** Further, the use of omni-directional wheels can allow the robotic crawler platform **12** the ability to move in diagonal directions upon appropriate operation of one or more specific pneumatic motors **22a-d.**

While the main pneumatic switch **54** is activated to allow pneumatic power to be provided to the flow control valves **32a-d,** it can be appreciated that if a user provides a forward motion input to the user input assembly **62,** for example by pressing the forward button **62F,** then pneumatic signals are provided to the first motor forward shuttle valve **66,** the second motor forward shuttle valve **78,** the third motor forward shuttle valve **82** and the fourth motor forward shuttle valve **98.** Accordingly, a pneumatic signal is then permitted to flow to the forward signal input **36a, 36c** of the first and third motor flow control valves **32a, 32c** that results in the first and third pneumatic motors **22a, 22c** to move their corresponding wheel **20a, 20c** in a forward direction. Further, a pneumatic signal is also permitted to flow to the reverse signal input **38b, 38d** of the second and fourth motor flow control valves **32b, 32d** that results in the second and fourth pneumatic motors **22b, 22d** to operate in a reverse direction as compared to the first and third pneumatic motors **22a, 22c** resulting in their corresponding wheel **20b, 20d** to move in a forward direction. Consequently, resulting in the robotic crawler platform **12** to move forward.

While the main pneumatic switch **54** is activated, it can be appreciated that if a user provides a right motion input to the user input assembly **62,** for example by pressing the right button **62R,** then pneumatic signals are provided to the first motor forward shuttle valve **66,** the second motor reverse shuttle valve **74,** the third motor reverse shuttle valve **88** and the fourth motor forward shuttle valve **98.** Accordingly, a pneumatic signal is then permitted to flow to the forward signal input **36a, 36d** of the first and fourth motor flow control valves **32a, 32d** that results in the first and fourth pneumatic motors **22a, 22d** to move their corresponding wheel **20a, 20d** in a forward direction. Further, a pneumatic signal is also permitted to flow to the reverse signal input **38b, 38c** of the second and third motor flow control valves **32b, 32c** that results in the second and third pneumatic motors **22b, 22c** to move their corresponding wheel **20b, 20c** in a reverse direction. It can be appreciated that the pneumatic signal provided to the third motor reverse shuttle valve **88** is capable of passing through the fine adjustment control valve **92** to the third motor reverse input **38c.** Consequently, resulting in the robotic crawler platform **12** to slide or crawl to the right.

While the main pneumatic switch **54** is activated, it can be appreciated that if a user provides a reverse motion input to the user input assembly **62,** for example by pressing the reverse button **62RR,** then pneumatic signals are provided to the first motor reverse shuttle valve **70,** the second motor reverse shuttle valve **74,** the third motor reverse shuttle valve **88** and the fourth motor reverse shuttle valve **90.** Accordingly, a pneumatic signal is then permitted to flow to the reverse signal input **38a, 38b** of the first and second motor flow control valves **32a, 32b** that results in the first and second pneumatic motors **22a, 22b** to move their corresponding wheel **20a, 20b** in a reverse direction. Further, a pneumatic signal is also permitted to flow to the reverse signal input **38c, 38d** of the third and fourth motor reverse shuttle valves **88, 90** that results in the third and fourth pneumatic motors **22c, 22d** to move those results in their corresponding wheel **20c, 20d** in a reverse direction. It can be appreciated that the pneumatic signals provided to the third and fourth motor reverse shuttle valves **88, 90** is capable of passing through the fine adjustment control valve **92** to their respective third and fourth motor reverse input **38c, 38d.** Consequently, resulting in the robotic crawler platform **12** moving in reverse.

While the main pneumatic switch **54** is activated, it can be appreciated that if a user provides a left motion input to the user input assembly **62,** for example by pressing the left button **62L,** then pneumatic signals are provided to the first motor reverse shuttle valve **70,** the second motor forward shuttle valve **78,** the third motor forward shuttle valve **82** and the fourth motor reverse shuttle valve **90.** Accordingly, a pneumatic signal is then permitted to flow to the forward signal input **36b, 36c** of the second and third motor flow control valves **32b, 32c** that results in the second and third pneumatic motors **22b, 22c** to move their corresponding wheel **20b, 20c** in a forward direction. Further, a pneumatic signal is also permitted to flow to the reverse signal input **38a, 38d** of the first and fourth motor flow control valves **32a, 32d** that results in the first and fourth pneumatic motors **22a, 22d** to move their corresponding wheel **20a, 20d** in a reverse direction. It can be appreciated that the pneumatic signal provided to the fourth motor reverse shuttle valve **90** is capable of passing through the fine adjustment control valve **92** to the fourth motor forward input **36d.** Consequently, resulting in the robotic crawler platform **12** to slide or crawl to the left.

Additionally, the pneumatic motors **22a-d** can be operated to provide a left and right turning motion utilizing any type of wheels, as shown in Table 3. This turning motion can be a zero turn or a forward/reverse motioned turn. It can be appreciated that these additional turning motions can be possible with the above represented omni-wheels.

**Table 3**

| | 1st Motor Forward Input | 1st Motor Reverse Input | 2nd Motor Forward Input | 2nd Motor Reverse Input | 3rd Motor Forward Input | 3rd Motor Reverse Input | 4th Motor Forward Input | 4th Motor Reverse Input |
|---|---|---|---|---|---|---|---|---|
| Right | X | | X | | | X | | X |
| Left | | X | X | | | X | X | |

It can be appreciated that any combination of any of the motors **22a-d** along with any combination of rotational direction of any of the motors **22a-d** can be utilized to provide any degree of turning with or without a forward or reverse motion component.

Operation of the fine adjustment control valve **92** can provide the operation of only the third or fourth pneumatic motors **22c, 22d** to provide small incremental turning movement of the robotic crawler platform **12,** as shown in Table 4.

**Table 4**

| | 3rd Motor Forward Input | 3rd Motor Reverse Input | 4th Motor Forward Input | 4th Motor Reverse Input |
|---|---|---|---|---|
| Right | | | X | |
| Left | | X | | |

Referring to FIG. 7, an example of the robotic crawler platform **12'** including two pneumatic motor driven wheels and an alternate embodiment air logic control system **60'** is illustrated and described. In this embodiment, the robotic crawler platform **12'** can include the four wheels **20a**, **20b**, **20c**, **20d**, with the front-right wheel **20a** and the front-left wheel **20b** each being connected to a pneumatic motor **22a, 22b.** The pneumatic motors **22a, 22b** include the same forward direction inputs **24a, 24b** and the same reverse direction inputs **26a, 26b** as described above. It can be appreciated that the second pneumatic motor **22b** is inversely orientated as to the first pneumatic motor **22a.**

The air logic control system **60'** is in fluid communication with each of the flow control valves **32a, 32b** and the throttle valves **44a, 44b** of a pneumatic valve system **30'** of the robotic crawler platform **12'.** The air logic control system **60'** can include a user input assembly **62'** allowing a user to control the movement and/or operation of the robotic crawler platform **12'.**

The user input assembly **62'** can be, but not limited to, one or more buttons or a joystick capable of controlling the pneumatic control signals to the multi-direction flow control valves **32a, 32b.** In the exemplary, the user input assembly **62'** of the air logic control system **60'** will be described as a two-button system including a forward button **62F** and a reverse button **62RR,** and a joystick **110** for providing left and right motion control signals. It can be appreciated that the joystick **110** can be implemented as left and right buttons, or the forward and reverse buttons **62F, 62RR** can be implemented as a joystick or as part of the joystick **110.** The buttons **62F, 62RR** can be, but not limited to, 3-way two position (neutral, open) button-controlled valves. It can be appreciated that the user input assembly **62'** can provide the pneumatic control signal to the appropriate motor shuttle valves **66, 70, 74, 78** to provide the desired motion of the robotic crawler platform **12'.** The desired motion can be a forward direction as indicated by the arrow **F,** a right direction, a reverse direction and a left direction. All directions can be provided by controlling the forward or reverse operation of any one of or any combination of the first pneumatic motor **22a** and the second pneumatic motor **22b.**

The pneumatic power from the pneumatic source **50** is further provided to the user input assembly **62'** and to the joystick **110** by way of line **58.** It can thus be appreciated that the pneumatic power from the pneumatic source **50** is provided as the pneumatic power that operates the pneumatic motors **22a, 22b** as well as to the air logic control system **60'.**

The forward control button **62F** can receive the pneumatic power from line **58** and upon activation provide a forward motion pneumatic control signal, by way of lines **64,** to the first motor forward shuttle valve **66** and the second motor forward shuttle valve **78.**

The pneumatic control signal from the first motor forward shuttle valve **66** is provided to the forward signal input **36a** of the first motor flow control valves **32a** by way of line **68,** consequently providing pneumatic power to the forward direction input **24a** of the first motor **22a** (forward rotational direction). Further, the pneumatic control signal from the second motor forward shuttle valve **78** is provided to the forward signal input **36b** of the second motor flow control valves **32b** by way of line **80,** consequently providing pneumatic power to the reverse direction input **26b** of the second motor **22b** (forward rotational direction).

The reverse control button **62RR** can receive the pneumatic power from line **58** and upon activation provide a reverse motion pneumatic control signal, by way of lines **86,** to the first motor reverse shuttle valve **70** and the second motor reverse shuttle valve **74.**

The pneumatic control signal from the first motor reverse shuttle valve **70** is provided to the reverse signal input **38a** of the first motor flow control valves **32a** by way of line **72,** consequently providing pneumatic power to the reverse direction input **26a** of the first motor **22a** (reverse rotational direction). Further, the pneumatic control signal from the second motor reverse shuttle valve **74** is provided to the reverse signal input **38b** of the second motor flow control valves **32b** by way of line **76,** consequently providing pneumatic power to the forward direction input **24b** of the second motor **22b** (reverse rotational direction).

The joystick **110** can be a 3-way three position (left, right, neutral) valve that provides a right pneumatic control signal or a left pneumatic control signal. The joystick **110** can receive the pneumatic power from line **58** and upon a right motion activation provide the right motion pneumatic control signal, by way of line **112,** to the first motor forward shuttle valve **66** and the second motor reverse shuttle valve **74,** consequently providing pneumatic power to the forward direction input **24a** of the first motor **22a** (forward rotational direction) and to the forward direction input **24b** of the second motor **22b** (reverse rotational direction).

Upon a left motion activation, the joystick **110** can provide the left motion pneumatic control signal, by way of line **114,** to the first motor reverse shuttle valve **70** and the second motor forward shuttle valve **78,** consequently providing pneumatic power to the reverse direction input **26a** of the first motor **22a** (reverse rotational direction) and to the reverse direction input **26b** of the second motor **22b** (forward rotational direction).

With the above in mind, it can be appreciated that a two-motor robotic crawler platform **12'** can include at least four motor shuttle valves **66, 70, 74, 78,** equaling to two shuttle valves per motor. It can be further appreciated that the motor shuttle valves can act as an OR logic switch, which only provides one pneumatic signal **68, 72, 76, 80** to their respective flow control valves based on the position or operation of the user input assembly **62F, 62RR, 110.**

As such, the air logic control system **60'** can provide a forward or right pneumatic signal to the first motor forward signal input **36a** by way of the first motor forward shuttle valve **66,** and a reverse or left pneumatic signal to the first motor reverse signal input **38a** by way of the first motor reverse shuttle valve **70.**

The air logic control system **60'** can provide a forward or left pneumatic signal to the second motor forward signal input **36b** by way of the second motor forward shuttle valve **78,** and a reverse or right pneumatic signal to the second motor reverse signal input **38b** by way of the second motor reverse shuttle valve **74.**

In use, it can now be understood that pneumatic power provided by the pneumatic source **50** can be supplied to the main pneumatic switch **54,** which can then provide the pneumatic power to the air logic control system **60'** and to the pneumatic motors **22a, 22b.** It can be appreciated that the pneumatic motors **22a, 22b** and the air logic control system **60** will not operate unless the main pneumatic switch **54** is operated in combination with a pneumatic signal being provided to any one of or any combination of the flow control valve **32a, 32b** by the air logic control system **60'.** Alternatively, the pneumatic power from the pneumatic source **50** can be supplied to the main pneumatic switch **54** and to the air logic control system **60** independently, with the pneumatic main switch **54** controlling the pneumatic power to the pneumatic motors **22a-d.**

Forward, right, reverse and left motion of the robotic crawler platform **12'** can be controlled by the operation of the pneumatic motors **22a, 22b,** and more specifically by the providing of a pneumatic control signal to one of their respective motor forward direction input **24a, 24b** or reverse direction input **26a, 26b.** Table 5 provides a representation of some of the different motions of the robotic crawler platform **12'** as compared with operation of its corresponding motor forward direction input **24a, 24b** or reverse direction input **26a,26b.** The below table shows the sequencing of pneumatic power to its appropriate motor input, with the second motor **22b** being an inverse of the first motor **22a.** With this in mind, a forward motion of the second motor **22b** can be provided by supplying pneumatic power to its corresponding reverse input **26b.**

**Table 5**

| | 1st Motor Forward Input | 1st Motor Reverse Input | 2nd Motor Forward Input | 2nd Motor Reverse Input |
|---|---|---|---|---|
| Forward | X | | | X |
| Reverse | | X | X | |
| Right | X | | | X |
| Left | | X | X | |

While the main pneumatic switch 54 is activated to allow pneumatic power to be provided to the flow control valves **32a, 32b,** it can be appreciated that if a user provides a forward motion input to the user input assembly **62',** for example by pressing the forward button **62F,** then pneumatic signals are provided to the first motor forward shuttle valve **66** and the second motor forward shuttle valve **78.** Accordingly, a pneumatic signal is then permitted to flow to the forward signal input **36a, 36b** of the first and second motor flow control valves **32a, 32b** that results in the first and second pneumatic motors **22a, 22b** to move their corresponding wheel **20a, 20b** in a forward direction. Consequently, resulting in the robotic crawler platform **12'** to move forward.

While the main pneumatic switch **54** is activated, it can be appreciated that if a user provides a right motion input to the user input assembly **62',** for example by moving the joystick **110** to the right, then pneumatic signals are provided to the first motor forward shuttle valve **66** and the second motor reverse shuttle valve **74.** Accordingly, a pneumatic signal is then permitted to flow to the forward signal input **36a** of the first motor flow control valve **32a** that results in the first pneumatic motor **22a** to move its corresponding wheel **20a** in a forward direction. Further, a pneumatic signal is also permitted to flow to the reverse signal input **36b** of the second motor flow control valve **32b** that results in the second pneumatic motor **22b** to move its corresponding wheel **20b** in a reverse direction. Consequently, resulting in the robotic crawler platform **12'** to move to the right.

While the main pneumatic switch **54** is activated to allow pneumatic power to be provided to the flow control valves **32a, 32b,** it can be appreciated that if a user provides a reverse motion input to the user input assembly **62',** for example by pressing the reverse button **62RR,** then pneumatic signals are provided to the first motor reverse shuttle valve **70** and the second motor reverse shuttle valve **74.** Accordingly, a pneumatic signal is then permitted to flow to the reverse signal input **38a, 38b** of the first and second motor flow control valves **32a, 32b** that results in the first and second pneumatic motors **22a, 22b** to move their corresponding wheel **20a, 20b** in a reverse direction. Consequently, resulting in the robotic crawler platform **12'** to move in reverse.

While the main pneumatic switch **54** is activated, it can be appreciated that if a user provides a left motion input to the user input assembly **62',** for example by moving the joystick **110** to the left, then pneumatic signals are provided to the first motor reverse shuttle valve **70** and the second motor forward shuttle valve **78.** Accordingly, a pneumatic signal is then permitted to flow to the reverse signal input **38a** of the first motor flow control valve **32a** that results in the first pneumatic motor **22a** to move its corresponding wheel **20a** in a reverse direction. Further, a pneumatic signal is also permitted to flow to the forward signal input **36b** of the second motor flow control valve **32b** that results in the second pneumatic motor **22b** to move its corresponding wheel **20b** in a forward direction. Consequently, resulting in the robotic crawler platform **12'** to move to the left.

Additionally, the pneumatic motors **22a, 22b** can be operated to provide a left and right turning motion, as shown in Table 6. This turning motion can be implemented by operating only one of the first or second pneumatic motors **22a, 22b.**

**Table 6**

| | 1st Motor Forward Input | 1st Motor Reverse Input | 2nd Motor Forward Input | 2nd Motor Reverse Input |
|---|---|---|---|---|
| Right | X | | | |
| Left | | X | | |
| OR | | | | |
| Right | | | | X |
| Left | | | X | |

It can be appreciated that any one of or any combination of the first and second motors **22a, 22b** along with any combination of rotational direction of the first and second motors **22a, 22b** can be utilized to provide any degree of turning with or without a forward or reverse motion component.

With reference to the above-described four motor and two motor configurations, it can be appreciated that any combination of the above describe buttons **62F, 62R, 62RR, 62L** and/or joysticks **92, 110** can be operated independently or simultaneously, thereby providing varying degrees of controlled operation of any one of or any combination of the pneumatic motors **22a-d.**

Referring to FIG. 8, a system according to some other embodiments s of the present technology having a robotic crawler platform **12'** configuration including two pneumatic motor driven wheels and an alternate embodiment air logic control system **60"** is illustrated and described. In these embodiments, the robotic crawler platform **12'** includes the two wheels **20a, 20b** with the front-left wheel **20a** and the front-right wheel **20b** each being connected to a pneumatic motor **22a, 22b.** The pneumatic motors **22a, 22b** include the same forward direction inputs **24a, 24b** and the same reverse direction inputs **26a, 26b** as described above. It can be appreciated that the second pneumatic motor **22b** is inversely orientated as to the first pneumatic motor **22a.**

The forward motion can be received by the pneumatic power from line **58** and upon activation provide a forward motion pneumatic control signal, by way of lines **56,** to the first motor forward shuttle valve **66** and the second motor forward shuttle valve **74.** It can be appreciated that a flow regulator input flow control R1 may or may not be included on incoming airline to motor outputs **46a** to port **34a** for left motor **2a** and **46b** to **34b** on motor **2b.** In some embodiments, R1 may be a pressure regulator. For the purpose of this specification, the flow pressure regulator is a device that controls the pressure of liquids or gasses by reducing a high input pressure to a lower output pressure. It produces a constant output pressure even when fluctuations in the inlet pressure occur.

The R1 can be independently connected through incoming lines **58** and configured to present equally defined pressure to each motor or can be presented in two separate **R1s** in direct fluid communication with incoming air pressure to the motors independently.

Onboard control box **60"** there are four communication ports **66, 70, 74** and **78.** The pneumatic control signal from the first motor forward shuttle valve **66** is provided to the forward signal input **36a** of the first motor flow control valves **32a** by way of line **68,** consequently providing pneumatic power to the forward direction input **24a** of the first motor **22a** (forward rotational direction). Further, the pneumatic control signal from the second motor forward shuttle valve **74** is provided to the forward platform directional signal input **36b** of the second motor flow control valves **32b** by way of line **80,** consequently providing pneumatic power to the reverse direction input **26b** of the second motor **22b** (forward rotational direction).

The reverse platform control sequence can output the pneumatic power from line **58** and upon activation provide a reverse motion pneumatic control signal, by way of lines **86,** to the first motor reverse shuttle valve **70** and the second motor reverse shuttle valve **78.**

The pneumatic control signal from the first motor reverse shuttle valve **70** is provided to the reverse signal input **38a** of the first motor flow control valves **32a** by way of line **72,** consequently providing pneumatic power to the reverse direction input **26a** of the first motor **22a** (reverse rotational direction). Further, the pneumatic control signal from the second motor reverse shuttle valve **78** is provided to the reverse signal input **38b** of the second motor flow control valves **32b** by way of line **80,** consequently providing pneumatic power to the forward direction input **24b** of the second motor **22b** (reverse rotational direction).

The joystick **115** can be a 5-way, three position (forward, reverse, neutral) valve that provides a forward pneumatic control signal **115a** or a reverse pneumatic control signal **115b** to motor **22a.** The joystick **116** can be a 5-way, three-position (forward, reverse, neutral) valve that provides forward motion pneumatic control signal 116a or a reverse pneumatic control signal **115b** to the **22b** motor.

It can be appreciated that a two-motor robotic crawler platform **12'** can include at least four motor shuttle valves **66, 70, 74, 78,** equaling two shuttle valves per motor actuated by two joysticks, **115a/b** and **116a/b.** It can be further appreciated that the motor shuttle valves can act as an OR logic switch, which only provides one pneumatic signal **68, 72, 76, 80** to their respective flow control valves based on the position or operation of the user input assembly to forward, reverse, left turn or right turn.

As such, the air logic control system **60"** can be configured to provide a forward or right pneumatic signal to the first motor forward signal input **36a** by way of the first motor forward shuttle valve **66,** and a reverse or left pneumatic signal to the first motor reverse signal input **38a** by way of the first motor reverse shuttle valve **70.**

A pneumatic signal can be provided to the second motor forward signal input **36b** by way of the second motor forward shuttle valve **74,** and a reverse or right pneumatic signal to the second motor reverse signal input **38b** by way of the second motor reverse shuttle valve **78.**

In use, it can now be understood that pneumatic power provided by the pneumatic source **50** can be supplied to the main pneumatic switch **54,** which can then provide the pneumatic power to the air logic control system **60"** and to the pneumatic motors **22a, 22b.** It can be appreciated that the pneumatic motors **22a, 22b** and the air logic control system **60"** will not operate unless the main pneumatic switch **54** is operated in combination with a pneumatic signal being provided to any one of or any combination of the flow control valve **32a, 32b** by the air logic control system **60".** Alternatively, the pneumatic power from the pneumatic source **50** can be supplied to the main pneumatic switch **54** and to the air logic control system **60"** independently, with the pneumatic main switch **54** controlling the pneumatic power to the pneumatic motors **22a-d.**

Forward, right, reverse, and left motion of the robotic crawler platform **12'** can be controlled by the operation of the pneumatic motors **22a, 22b,** and more specifically by the providing of a pneumatic control signal to one of their respective motor forward direction inputs **24a, 24b** or reverse direction input **26a, 26b.** Table 4 provides a representation of some of the different motions of the robotic crawler platform **12'** as compared with operation of its corresponding motor forward direction input **24a, 24b** or reverse direction input **26a,26b.** With this in mind, a forward motion of the second motor **22b** can be provided by supplying pneumatic power to its corresponding reverse input **26b.**

While the main pneumatic switch **54** is activated to allow pneumatic power to be provided to the flow control valves **32a, 32b,** it can be appreciated that if a user provides a forward motion input to the user input assembly **62",** for example by pressing joystick **115** to forward position **115a,** then pneumatic signals are provided to the first motor forward shuttle valve **66** and pressing the **116** joystick to forward position **116a** engaging shuttle valve **74.** Accordingly, a pneumatic signal is then permitted to flow to the forward signal input **36a, 36b** of the first and second motor flow control valves **32a, 32b** that results in the first and second pneumatic motors **22a, 22b** to move their corresponding wheel **20a, 20b** in a forward direction. Consequently, resulting in the robotic crawler platform **12'** to move forward.

While the main pneumatic switch **54** is activated to allow pneumatic power to be provided to the flow control valves **32a, 32b,** it can be appreciated that if a user provides a forward motion input to the user input assembly **62".** Accordingly, a pneumatic signal is then permitted to flow to the forward signal input **38a, 38b** of the first and second motor flow control valves **32a, 32b** that results in the first and second pneumatic motors **22a, 22b** to move their corresponding wheel **20a, 20b** in a reverse direction. Consequently, resulting in the robotic crawler platform **12'** to move in forward.

While the main pneumatic switch **54** is activated to allow pneumatic power to be provided to the flow control valves **32a, 32b,** it can be appreciated that if a user provides a reverse motion input to the user input assembly **62".** Accordingly, a pneumatic signal is then permitted to flow to the reverse signal input **38a, 38b** of the first and second motor flow control valves **32a, 32b** that results in the first and second pneumatic motors **22a, 22b** to move their corresponding wheel **20a, 20b** in a reverse direction. Consequently, resulting in the robotic crawler platform **12'** to move in reverse.

While the main pneumatic switch **54** is activated to allow pneumatic power to be provided to the flow control valves **32a, 32b,** it can be appreciated that if a user provides a reverse motion input to the user input assembly **62".** Accordingly, a pneumatic signal is then permitted to flow to the reverse signal input **38a, 38b** of the first and second motor flow control valves **32a, 32b** that results in the first and second pneumatic motors **22a, 22b** to move their corresponding wheel **20a, 20b** in a reverse direction. Consequently, resulting in the robotic crawler platform **12'** to move in reverse.

While the main pneumatic switch **54** is activated, it can be appreciated that if a user provides a right motion input to the user input assembly **62".** Accordingly, a pneumatic signal is then permitted to flow to the forward signal input **36a** of the first motor flow control valve **32a** that results in the first pneumatic motor **22a** to move its corresponding wheel **20a** in a forward direction. Further, a pneumatic signal is also permitted to flow to the reverse signal input **36b** of the second motor flow control valve **32b** that results in the second pneumatic motor **22b** to move its corresponding wheel **20b** in a reverse direction. Consequently, resulting in the robotic crawler platform **12'** to move to the right.

While the main pneumatic switch **54** is activated, it can be appreciated that if a user provides a left motion input to the user input assembly **62",** for example by moving the **115b** joystick reverse, then pneumatic signals are provided to the first motor reverse shuttle valve **70** and the second motor forward shuttle valve **74.** Accordingly, a pneumatic signal is then permitted to flow to the reverse signal input **38a** of the first motor flow control valve **32a** that results in the first pneumatic motor **22a** to move its corresponding wheel **20a** in a reverse direction. Further, a pneumatic signal is also permitted to flow to the forward signal input **36b** of the second motor flow control valve **32b** that results in the second pneumatic motor **22b** to move its corresponding wheel **20b** in a forward direction. Consequently, resulting in the robotic crawler platform **12'** to move to the left.

Additionally, the pneumatic motors **22a** and **22b** can be operated to provide a left and right turning motion, as shown in Table 5. This turning motion can be implemented by operating only one of the first or second pneumatic motors **22a, 22b** or both for sharper turns.

It can be appreciated that any one of or any combination of the first and second motors **22a, 22b** along with any combination of rotational direction of the first and second motors **22a, 22b** can be utilized to provide any degree of turning with or without a forward or reverse motion component.

In some embodiments, a first form of speed/regulating control is provided by Individual flow control valves noted as **44a** and **44b** onboard platform **12'** (see FIG. 7). It would be understood that in some embodiments, this first form of speed control may be adopted in the system of FIG. 8 (although not shown in FIG 8). Second and third forms of regulating controls are illustrated in the embodiment of FIG. 8. The second form of regulating controls is an R1 flow regulator that is arranged on **60"** to provide flow control to **12'** as incoming flow regulation by flow to the motors specified direction in direct communication with the incoming pneumatic current to the respective motors. Additionally, or alternatively, a third form of regulating control observed in Fig 8 are the incoming ported flow controls that can be in control box **60"** controlling directional exhaust restrictions independently to each direction (forward/reverse) of each motor **22a/22b,** thus providing more precision in speed control than the first and second forms of speed/regulating control. As illustrated in FIG. 8, the incoming ported flow controls are control valves **44c, 44d, 44e, 44f** in fluid communication with respective exhaust outputs **151, 152, 153, 154** of the exhaust ports of control valves **32a,32b** such that directional exhaust restrictions are being controlled independently to each direction (forward/reverse) of each motor. It would be understood that in some embodiments such flow control values **44a, 44b 44c, 44d, 44e, 44f** can be for example but not limited to one-way flow control valves, potentiometers, and the like. In some embodiments, the exhaust ports that provide exhaust outputs **151, 152, 153, 154** air pneumatic mufflers.

Any one or combination of the aforementioned first, second and third flow controls and methods may be adopted in FIG. 8 or any one of the other embodiments, where appropriate.

With reference to the above-described four motor and two motor configurations, it can be appreciated that any combination of the above describe two-lever joysticks **115a/b, 116a/b** can be operated independently or simultaneously, thereby providing varying degrees of controlled operation of any one of or any combination of the pneumatic motors **22a-d.**

The user input assembly **62"** can be, but not limited to, two or more three-way joystick levers capable of controlling the pneumatic control signals to the multi-direction flow control valves **32a** for left motor **20a** and **32b** for right motor **20b.**

The pneumatic power from the pneumatic source **50** is further provided to the user input assembly **62"** and to the left motor joystick **115b** and right motor joystick **116b** by way of line **58.** It can thus be appreciated that the pneumatic power from the pneumatic source **50** is provided as the pneumatic power that operates the pneumatic motors **22a, 22b** as well as to the air logic control system **60".**

The air logic control system **60"** can include a dual-lever user input assembly versus previously shown button interface **62"** allowing a user to control the movement and/or operation of the robotic crawler platform **12'** in previously disclosed motion (forward, reverse, left, right). The motions can be sequenced with the use of left lever **115** and right lever **116.** Each has a forward position for left joystick/lever of **115a** and right as **116a** and reverse position as **115b** for left motor and **116b** for the right joystick/lever. Both **115** and **116** have center neutral position as default resting position.

In the exemplary, the user input assembly **62"** of the air logic control system **60"** left motor **22a** will be described as **115a** for forward and **115b** for reverse is a two-lever control system including a left motor control forward **66** and a reverse **70.**

In the exemplary, the user input assembly **62"** of the air logic control system **60"** right motor **22b** will be described as **116a** for forward and **116b** a two-lever control system including a right motor control forward **74** and a reverse **78.**

It can be appreciated that the user input assembly **62"** can provide the pneumatic control signal to the appropriate motor shuttle valves **66, 70, 74, 78** to provide the desired motion of the robotic crawler platform **12'.**

In the exemplary, the user input assembly **62"** of the air logic control system **60"** will be described as a two-lever control system including a left motor control lever/joystick **115a** with a forward joystick signal **66** providing a forward motor motion signal to **26a** on motor **2a** delivering a forward platform **12'** motion and a right motor control lever/joystick **116a** with a forward joystick signal **74** providing reverse motor motion signal to **26b** on motor **2b** delivering forward platform **12'** motion

In the exemplary, the user input assembly **62"** of the air logic control system **60"** will be described as a two-lever control system including a left motor control lever/joystick **115b** with a reverse joystick signal **70** providing a reverse motor motion signal to **24a** on motor **2a** delivering a reverse platform **12'** motion and a right motor control lever/joystick **116a** with a reverse joystick signal **78** providing forward motor motion signal to **26b** on motor **2b** delivering revers platform **12'** motion
Whereas the forward position of **115a** joystick for providing forward motion of motor 2a in the sequence of **66>68>36a>40a>24a** logic control flow for wheel in motion to deliver platform forward motion potential and in additional forward position of **116a** joystick provides reverse motor sequencing of motor **2b** in the **78>80>36b>40b>26b** delivering platform forward motion potential. This combination delivers forward motion of platform **'12.**

Whereas the back/reverse position of **115b** joystick provides reverse motion sequencing of motor **2a** in the **70>72>38a>42a>26a** logic control flow of the wheel in motion and back/reverse position of **116b** joystick provides forward motor sequencing of motor **2b** in the **74>76>38b>42b>24b** delivering platform reversing motion potential for crawler platform **12'.** This combination delivers reverse motion of platform ' 12.

Left turning platform control can be obtained by reverse directional control from left front motor with subsequent forward platform motion rotation from the right front motor. This sequence can be obtained by back position joystick sequencing of lever control for motor 22a and forward position joystick sequencing of lever 2 for motor 22b.

Subsequently right turning platform control can be obtained by forward directional control **115a** to left front motor with subsequent reverse of 116b that will set platform motion rotation to the right.

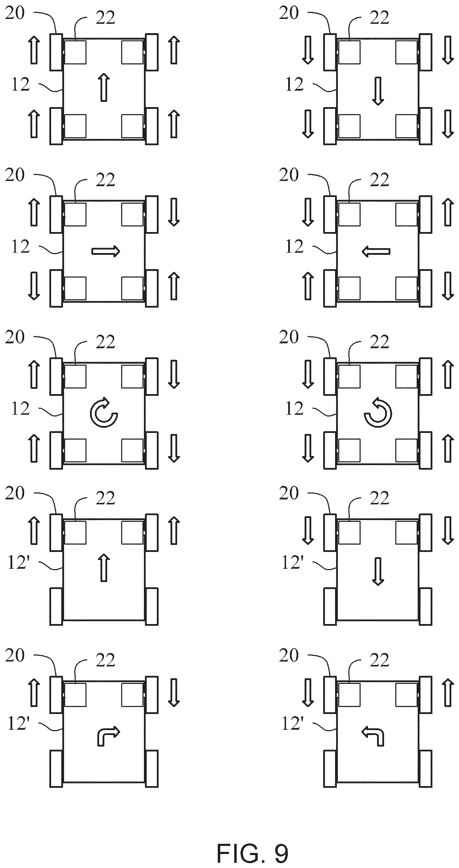

FIG. 9 is an exemplary block diagram showing possible directional motion of the robotic crawler platform **12, 12',** and the rotational direction of the wheels as driven by their corresponding motor controllable by the air logic. It can be appreciated that other possible motor controls and/or wheel rotation directions can be implemented by one or more embodiments of the present technology that what is shown or described. For example, one or more of the motors can be provided with pneumatic power greater than other motors. Still further in the exemplary, one or more motors can be provided with no pneumatic power while one or more other motors can be provided with pneumatic power of the same or varying degree.

It will be understood that in some embodiments, the combination or order of components and/or method steps may be changed, where appropriate. It will be further understood that in some embodiments, components and/or method steps from one embodiment may be used in place of or in addition to components and/or method steps of another embodiment, where appropriate. It will be yet further understood that one or more components and/or method steps may be omitted, where appropriate.

According to yet some other embodiments of the present technology, there is provided an automated pneumatic remote controlled robotic crawler or nondestructive testing of hazardous environments. This novel automated static mitigating pneumatic remote controlled robotic crawler for non-destructive testing of hazardous environments according to some other embodiments will now be described in more detail in paragraphs 246 to 308 set forth herein below.

In some embodiments, the automated non-electric and static-mitigating environments is a compressed air robotic crawler platform for nondestructive testing with multidirectional flow control flows through hoses to independent pneumatic motors attached to four independent omnidirectional wheels.

In some embodiments, the automated non-electric and static-mitigating environments is a compressed air robotic crawler platform for nondestructive testing with multidirectional flow control flows through hoses to independent pneumatic motors attached to four independent omnidirectional wheels.

In some embodiments, the automated low to no-static pneumatic remote controlled robotic crawler comprises multi-directional flow control valves for flow through hoses to independent pneumatic motors attached to four independent omnidirectional wheels interchangeable with direct drive wheels when increased traction is required. As stated above, confined space entry and hazardous carbon fumes present
costly and dangerous risks for industry and inspectors. Static discharge concerns need mitigation while presenting access to difficult to access locations. Embodiments of the automated low to nostatic pneumatic remote controlled robotic crawler for non-destructive testing of hazardous environments described in this specification in paragraphs 246 to 308 solve such problems by a pneumatic remote controlled solution for inspection by low to no-static robots. Pneumatic remote-controlled solutions may elevate utility and present a way to the necessary inspection in a safe and automated way through low to no-static robots. A digital sensor conventionally held by an inspector is put on an automated low-static robotic crawler with a platform could save time, money and increase safety/reliability of assets. The sensors will carry their own certifications.

Embodiments of the automated low-static pneumatic remote controlled robotic crawler for non-destructive testing of hazardous environments described in this specification in paragraphs 246 to 308 differ from and improve upon currently existing options. In particular, some embodiments differ from the current inspection process, which is done with humans in confined spaces. This is dangerous for the asset and the human (fumes, etc.). Also, electric motors and static discharging materials are of great concern. The system in design introduces movement without discharge potential by way of pneumatic motors. Specifically, the use of high torque, low revolutions per minute (RPM) pneumatic motors are not prevalent in the inspection crawling robot platforms. The automated low-static pneumatic remote controlled robotic crawler seeks to have phase one prototype development with collaborative second generation design in concert with certifying body like UL to be the first Class I, Division I inspection platform or ATEX.

Currently, certifications are required for non-electric; therefore, this system will be delivering a higher degree of safety.

In addition, some embodiments of the automated low-static pneumatic remote controlled robotic crawler for non-destructive testing of hazardous environments improve upon the currently existing options by eliminating the use of electric motors which, in and around static discharging materials, are of great concern. Specifically, static discharge in electric motors is a highly dangerous possibility with the existing options. Add these concerns to the existing human safety concerns (fumes, etc.) and there is little doubt that the existing inspection process done with humans in small spaces is too dangerous for both human and assets being inspected, due to the potential electric discharge by electronic motor movements. The automated low-static pneumatic remote controlled robotic crawler of some embodiments of the present disclosure introduces movement without discharge potential. Furthermore, the automated low-static pneumatic remote controlled robotic crawler can potentially be utilized for more frequent and varied deployments as some of the extra cleaning processes save time/money. In some embodiments, the automated low-static pneumatic remote controlled robotic crawler brings the human back in a data review mode versus direct access. This is accomplished by multi-directional flow control flows through hoses to independent pneumatic motors attached to four independent omnidirectional wheels of the automated pneumatic remote controlled robotic crawler. Also, the automated low-static pneumatic remote controlled robotic crawler can incorporate sensors and other devices or circuits which produce additional aspects as a part of a whole integrated system.

The automated low-static pneumatic remote controlled robotic crawler for non-destructive testing of hazardous environments of some embodiments of the present disclosure may be comprised of the following elements. This list of possible constituent elements is intended to be exemplary only and it is not intended that this list be used to limit the automated low-static pneumatic remote controlled robotic crawler to just these elements. Persons having ordinary skill in the art relevant to the present disclosure may understand there to be equivalent elements that may be substituted within the present disclosure without changing the essential function or operation of the automated low-static pneumatic remote controlled robotic crawler.
1. Crawler
2. Top plate
3. Axle bushing
4. Base block for controls
5. Four independent omnidirectional Mecanum wheels
6. Four independent pneumatic motors
7. Frame
8. Valves, hoses

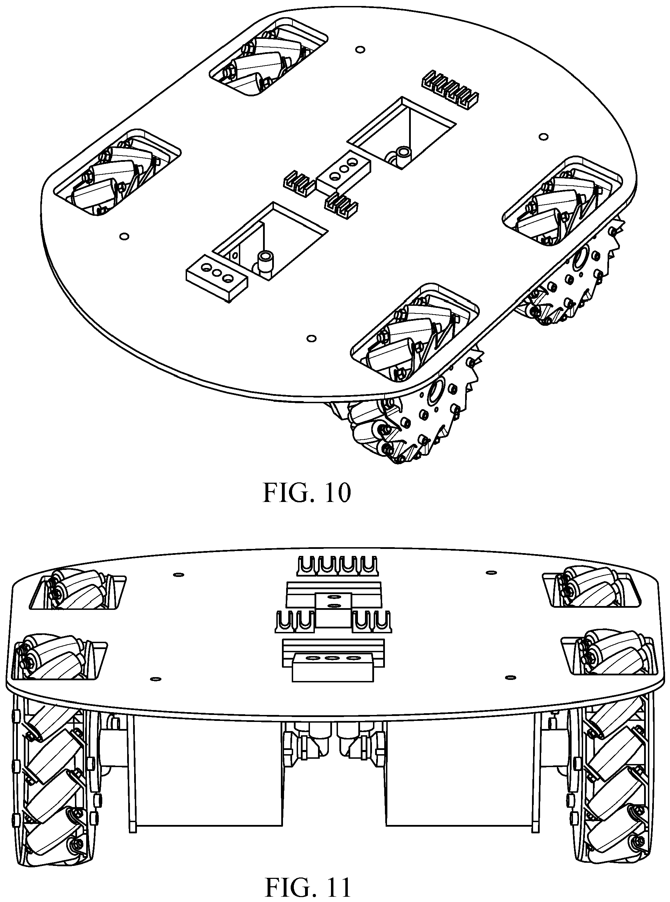

As will be explained in more detail below, the various elements of the automated low-static pneumatic remote controlled robotic crawler for non-destructive testing of hazardous environments of the present disclosure as presented in the figures 10 to 45 may be related according to assembly and sub-assemblies shown in the accompanying drawings 10 to 45. In this way, the components and elements of the automated low static pneumatic remote controlled robotic crawler for non-destructive testing of hazardous environments are integrated into a single compact system.

### Crawler

### Platform and chassis

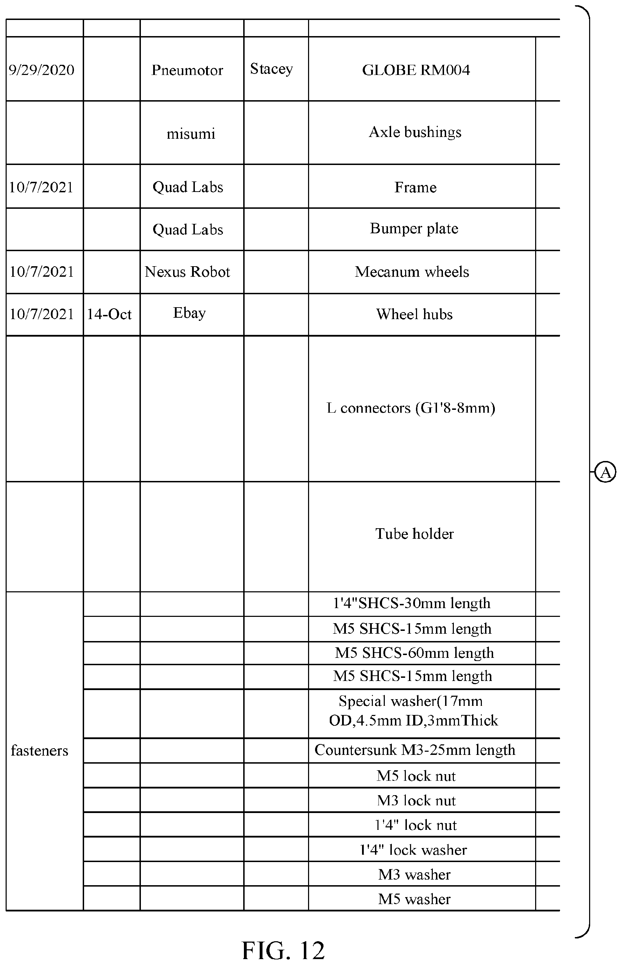

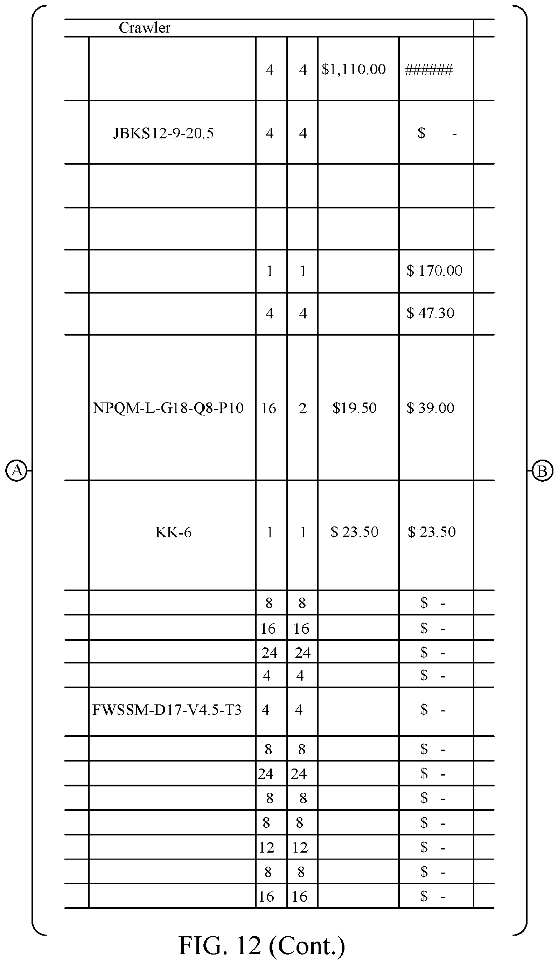

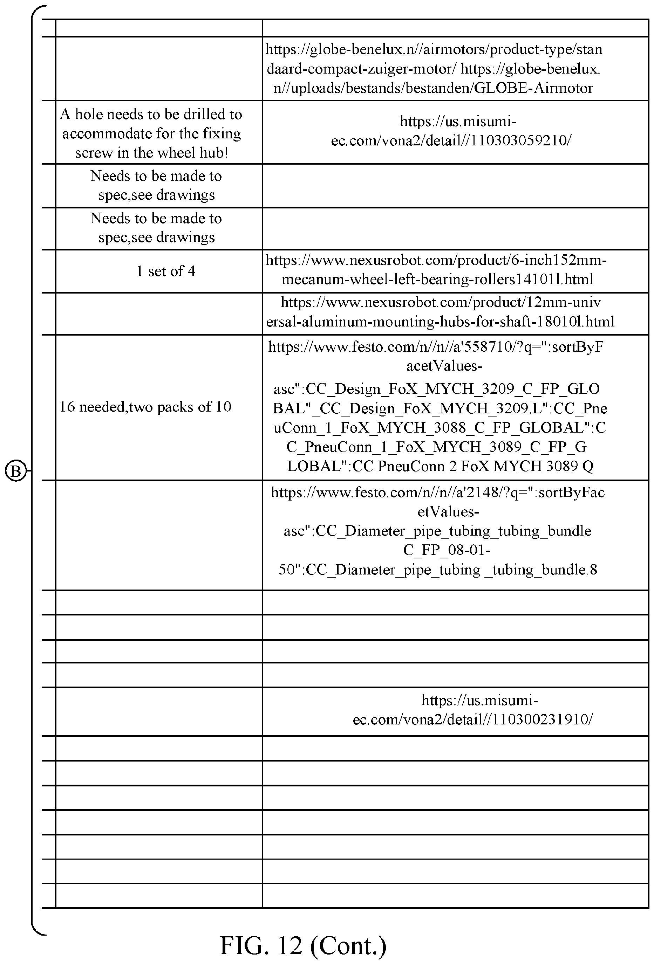

FIG. 10 is a top perspective view of a crawler according to some embodiments for a pneumatic crawling robot according to another aspect of the present technology. FIG. 11 is front perspective view of the crawler of FIG. 10. FIG. 12 is a table listing components according to some embodiments for the crawler of FIG. 11. Note the following points: 1) Thickness around 4 mm (whatever is easily available to you), 2) Check stiffness, depending on material, 3) Can be made from flat plate and bended or multiple flat pieces connected in another way, 4) Depends on supplier experience, and 5) availability 2D drawing and STEP-file available.

### Deck and Baseplate

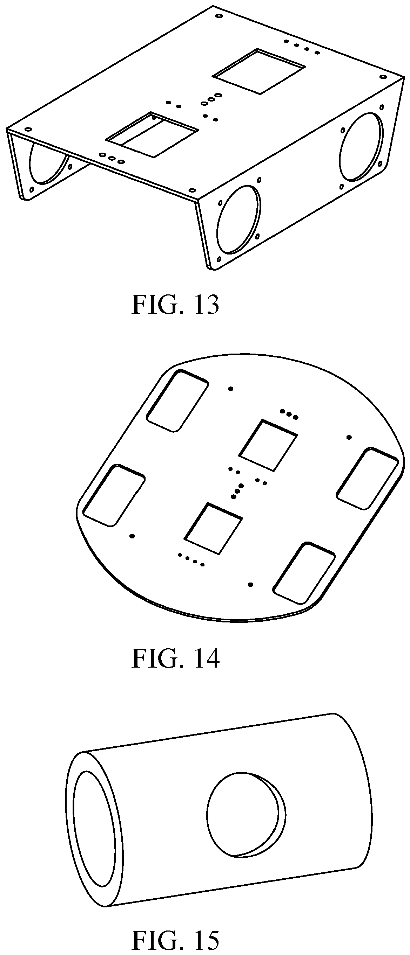

FIG. 13 is the base plate according to some embodiments for the crawler of FIG. 11.

### Top plate

FIG. 14 is the top plate according to some embodiments for the crawler of FIG. 11. Note the following points: 1) Original thickness is 4 mm, but can be whatever is available and reasonably stiff, 2) Laser cut, waterjet cut or mill from flat sheet of polymer, 3) Check what works well with the material and what the supplier/manufacturer recommends Ideally manufactured at the same company as the frame so that similar tolerances are used, and 4) 2D drawing and STEP-file available.

### Axel Bushing

FIG. 15 is the axle bushing according to some embodiments for the crawler of FIG. 11. Note the following points: 1) This is an ordered part, but it needs an extra hole to accommodate the fitting bolt, 2) If it is difficult to locate the hole exactly in the middle the diameter can be increased to 7mm to increase the clearance, and 3) 2D drawing available.

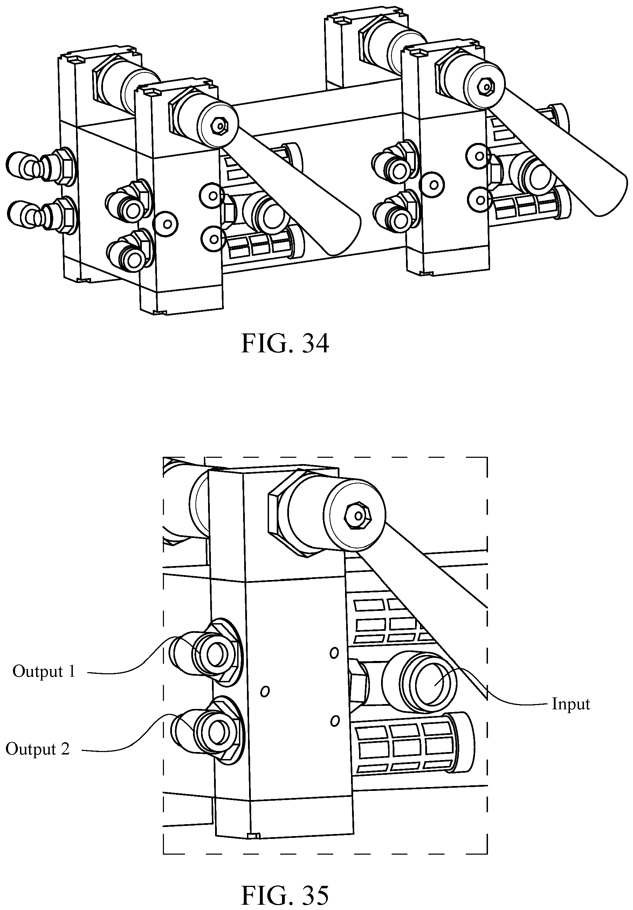

### Base Block for Controls (see Fig. 34)

The base block can just be a block of wood. The dimensions are not critical, see what you can easily find. Important are: 1) The hole pattern so that the valves can be mounted (making the holes oversized makes it easier, 2) The distance between the valves should be big enough so that there is no interference, and 3) 2D drawing and STEP-file available.

### Crawler Assembly

### Mecanum wheel sub-assembly

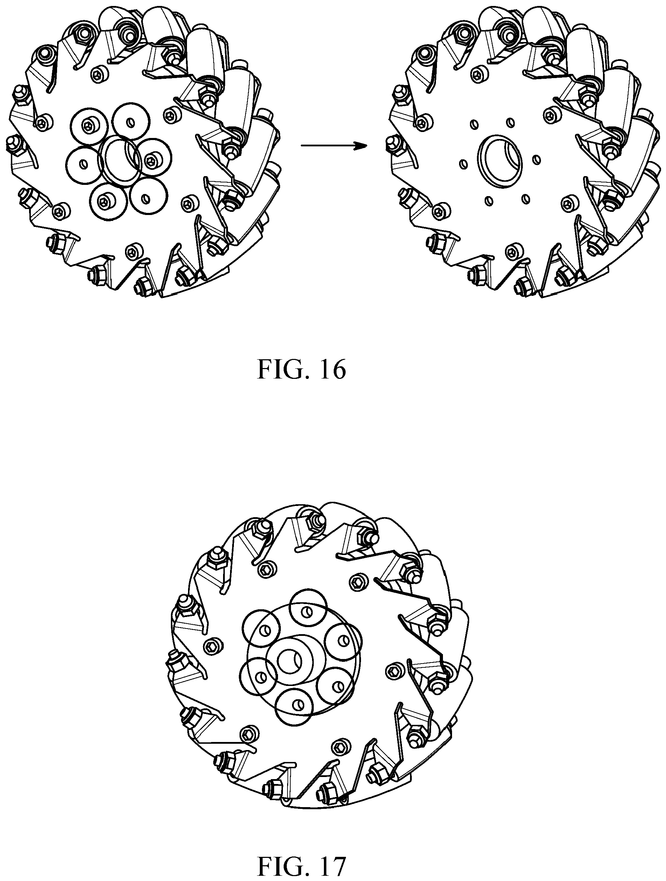

FIGS. 16 are views of mecanum wheel sub-assembly according to some embodiments for the crawler of FIG. 11. Note the following: 1. If the wheel is not assembled, assemble it according to manufacturer's instructions, 2. Remove center bolts carefully 1. Already put a few M5x60mm bolts (for the next step) in the empty holes to keep them aligned. FIG. 17 is a view of the mecanum wheel sub-assembly of FIG. 16 with the axle bushing. 1. Mount the wheel hub with the six M5x60mm bolts 1. The threaded part (where the nut goes) is on the hub side (to avoid the bolts sticking out) 2. Place a washer over the bolt and tighten with the lock nut

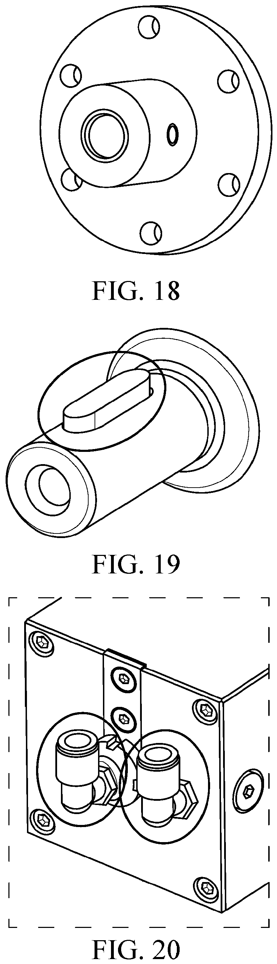

FIG. 18 is a partial view of the mecanum wheel sub-assembly of FIG. 17 and illustrating the axle bushing. 1. Slide the axle bushing into the hub and align the holes on the side 2. Thread in the mounting bolt (delivered with the hub) to keep the holes aligned during assembly 1. Only thread it in to keep the bushing aligned, if it sticks out it will prevent mounting on the axle.

### Motor sub-assembly

FIG. 19 is a view of the shaft of the motor sub-assembly according to some embodiments for the crawler of FIG. 11. FIG. 20 is the back side of the motor sub-assembly of FIG. 20. 1. Remove the key from the shaft (if already mounted) 2. On the back side, mount two L-connectors (NPQM-L-G18-Q8-P10).

### Frame assembly

### Motor mount assembly

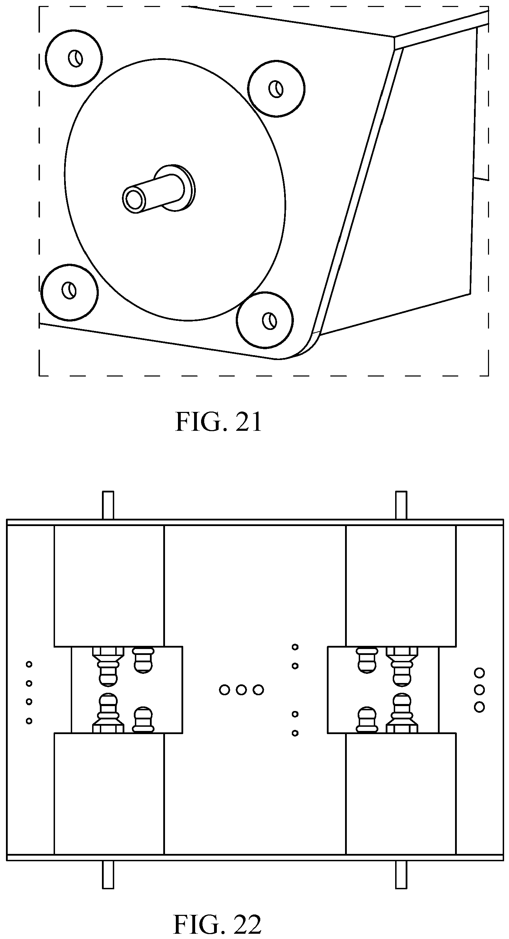

FIG. 21 is a partial view illustrating the motor sub-assembly of FIG. 19 mounted to the frame for the crawler of FIG. 11. FIG. 22 is a view illustrating 4 motor sub-assemblies according to some embodiments mounted to the frame for the crawler of FIG. 11. 1. Mount the 4 motor sub-assemblies to the frame with the M5×15mm bolts and M5 washers 1. Mount the motors such that the connectors are aligned as in the FIGS. 21 and 22.

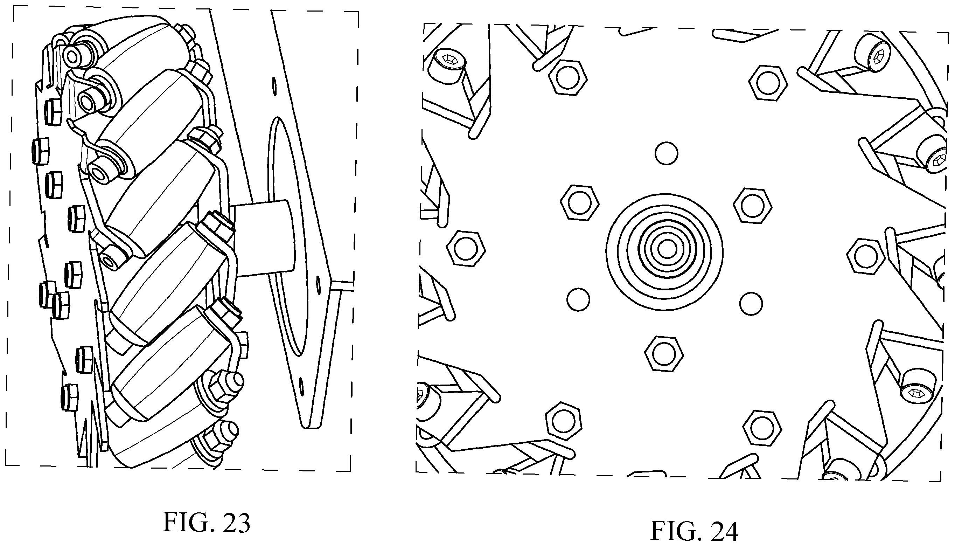

FIGS. 23 to 25 illustrate different partial views of the mounted Mecanum wheel sub-assemblies for the crawler of FIG. 11. 1. Slide the Mecanum wheel sub-assembly onto the motor shaft 2. Thread and tighten the M4×15mm bolt (with special washer (FWSSM-D17-V4.5-T3)) into the threaded hole in the shaft 3. Tighten the securing bolt on the side of the hub.

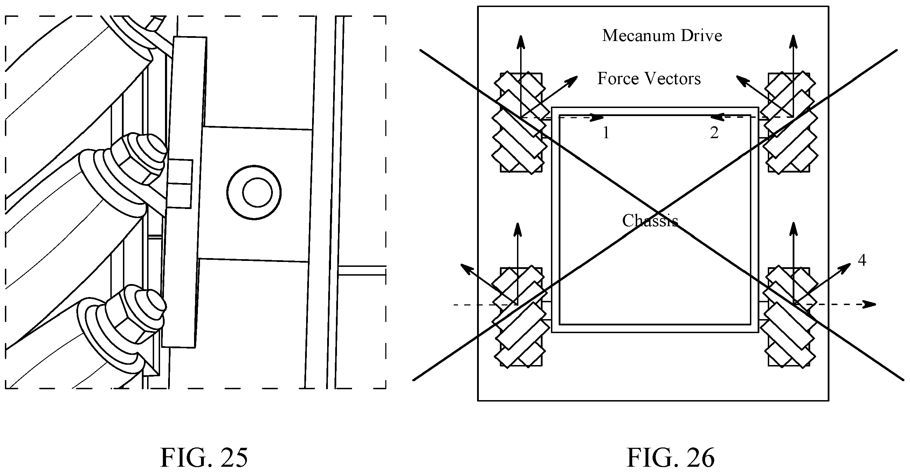

FIG. 26 illustrates a view from the top of the mecanum drive showing the wheels of the mounted Mecanum wheel sub-assemblies for the crawler of FIG. 11. 1. Mount all four Mecanum wheel sub-assemblies such that the wheels make an X-shape when looking from the top.

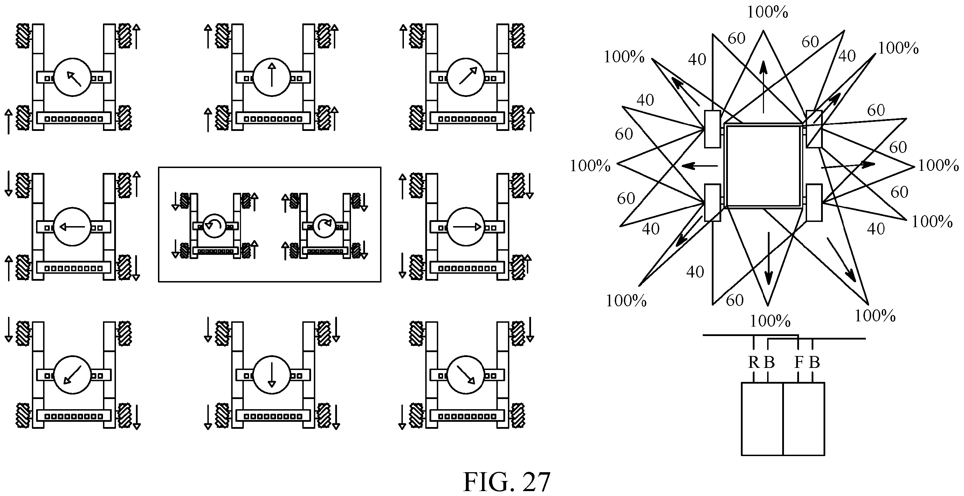

FIG. 27 illustrates possible configurations of the mecanum drive of FIG. 26;

### Hose management mounts

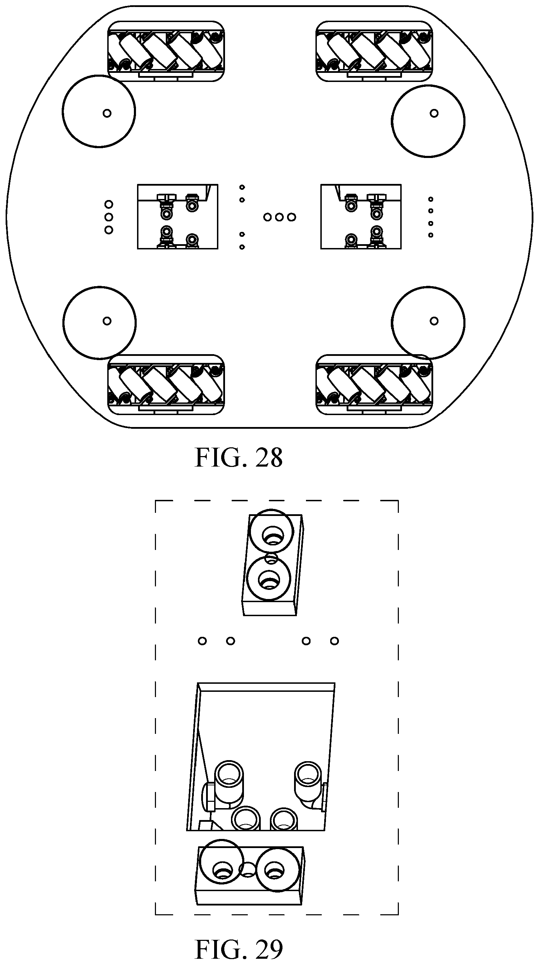

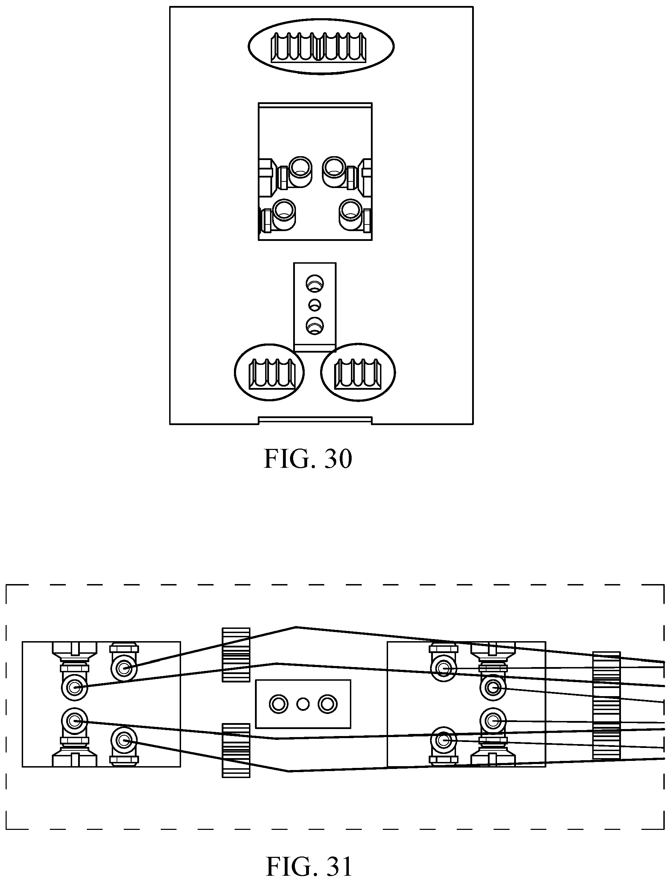

FIG. 28 illustrates the top plate of FIG. 14 mounted to the mecanum drive of FIG. 26 for hose management. FIG. 29 is a partial view illustrating tube holders according to some embodiments mounted to the assembly of FIG. 27 for hose management. FIG. 30 is a partial view illustrating accessory plates according to some embodiments mounted to the assembly of FIG. 27 for hose management. 1. Mount the top plate with the 4 ¼" bolts, washers on both sides and lock nuts. (do not tighten yet) 2. Mount the accessory base plates with the ¼" bolts and a washer and lock nut (do not tighten yet) 3. Mount the tube holders with the M3x25 mm (countersunk) bolts and a washer and lock nut 4.Tighten all bolts and nuts.

FIG. 31 illustrates the routing according to some embodiments for tubes pushed into the tube holders of FIG. 28. 1. Press the 8 mm tubes into the connector 2. Push the tubes in the holders according to the routing below 1. Make sure to give the tubes a smooth radius.

### Control assembly

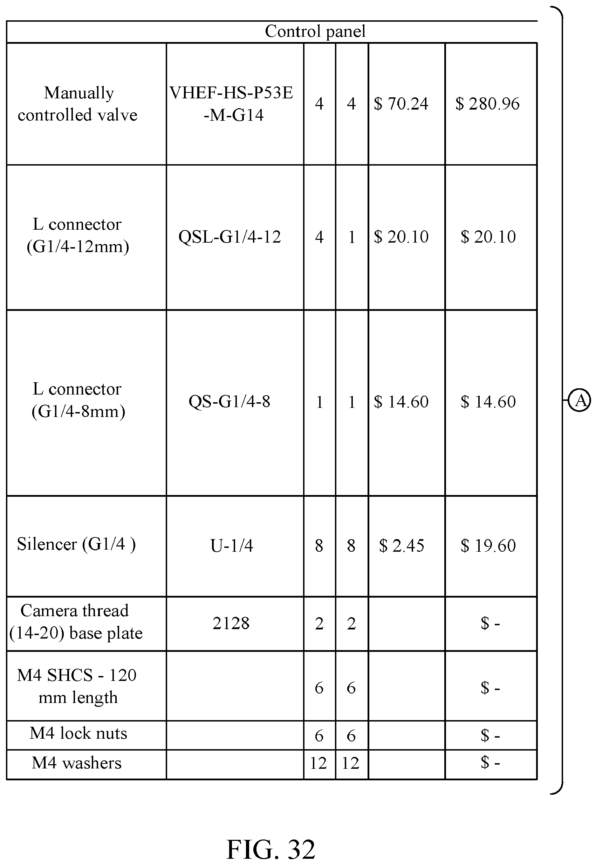

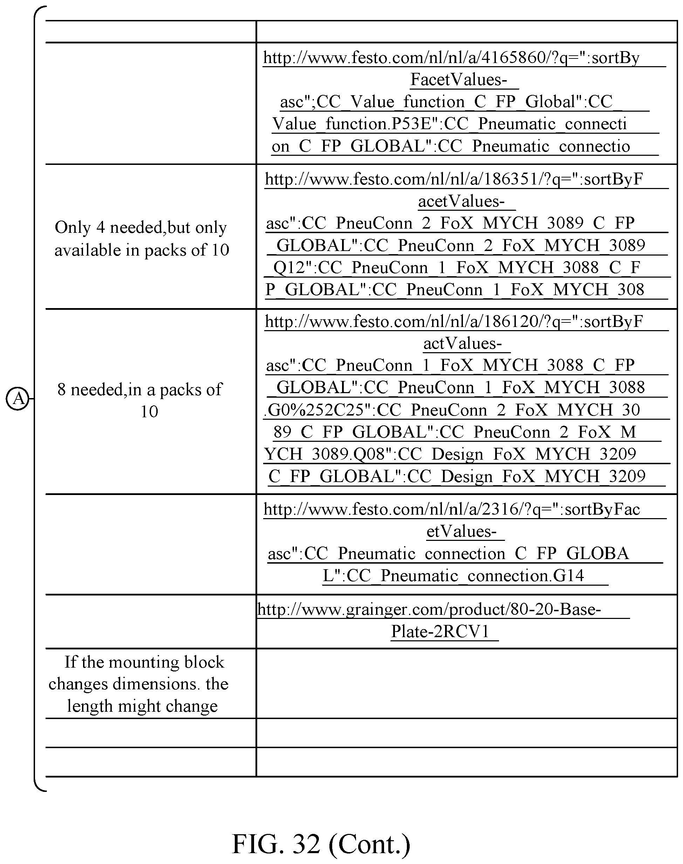

FIG. 32 is a table of components of a control assembly according to some embodiments for controlling the crawler of FIG. 11.

### Valve sub-assembly

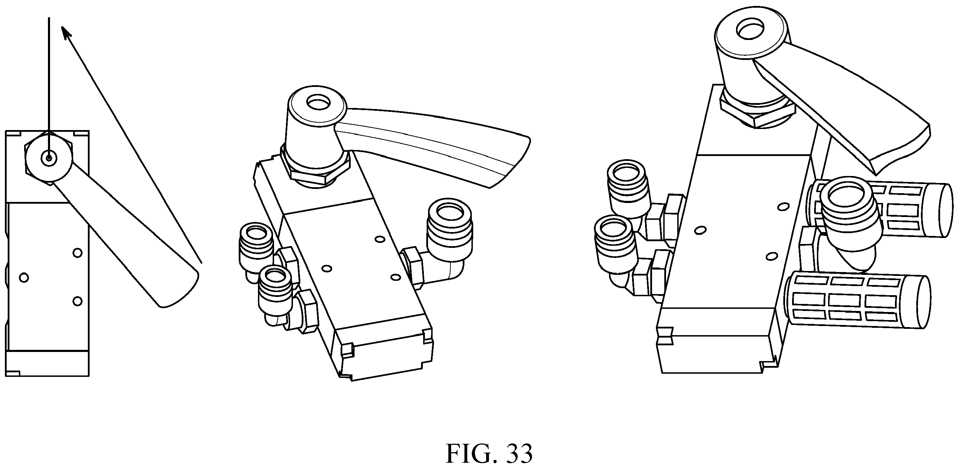

FIG. 33 illustrates valves according to some embodiments for the control assembly for controlling the crawler of FIG. 11. 1. Adjust the lever so that it is vertical in the middle (neutral) position 2. Thread the two 8 mm connectors (QSL-G1/4-8) into the outlet ports and the 12 mm connector (QSL-G1/4-12) into the inlet 3. Connect the silencers (U-1/4) to the last two ports

FIG. 34 illustrates the valves of FIG. 33 assembled to the base block according to some embodiments for controlling the crawler of FIG. 11. 1. Bolt the valves to the base block using the M4×120mm bolts and washers and lock nuts.

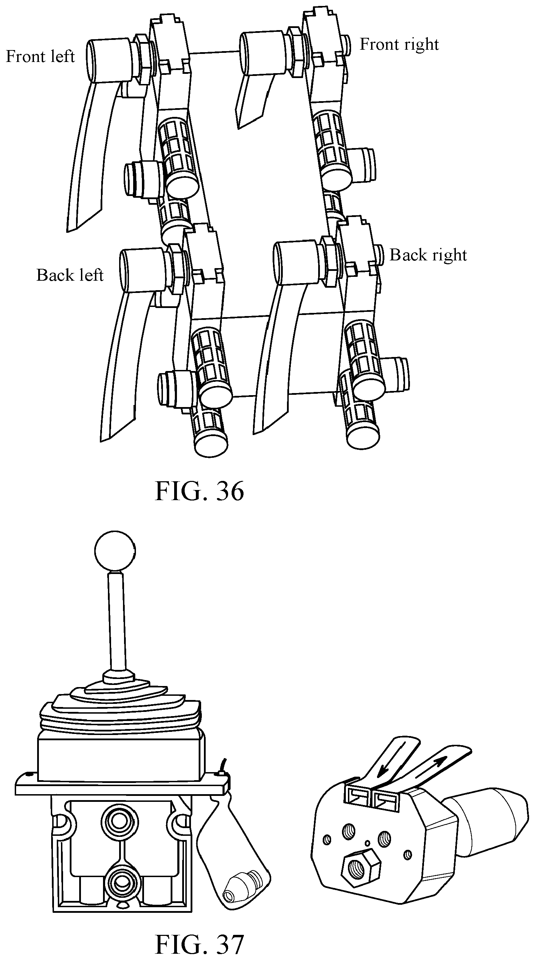

FIG. 35 illustrates a partial view of the assembly of FIG. 34. FIG. 36 illustrates another view of the assembly of FIG. 34. 1. Each valve corresponds to a wheel (see picture) 2. Connect a 12 mm tube to the 4-way splitter, (which is connected to compressed air) 3. Connect the 12 mm tube to the input of the valve 4. Connect two 8 mm tubes from one motor to the outputs of the valve 5. Test if moving the handle forward spins the wheel forward 1. If it is spinning backwards, swap the two 8 mm tubes.

### Alternative to evaluate:

FIG. 37 illustrates an alternative control assembly according to some embodiments for controlling the crawler of FIG. 11.

### Flow control (optional)

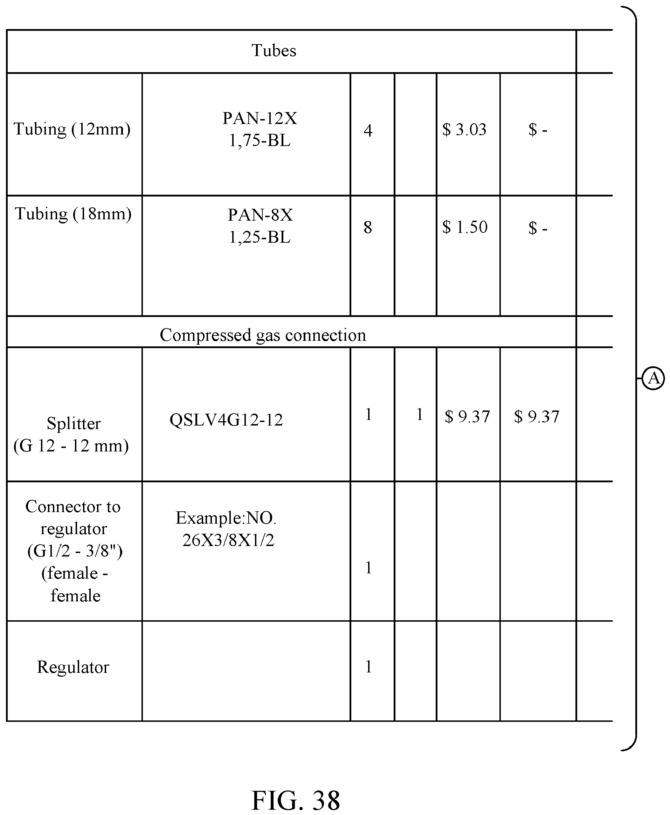

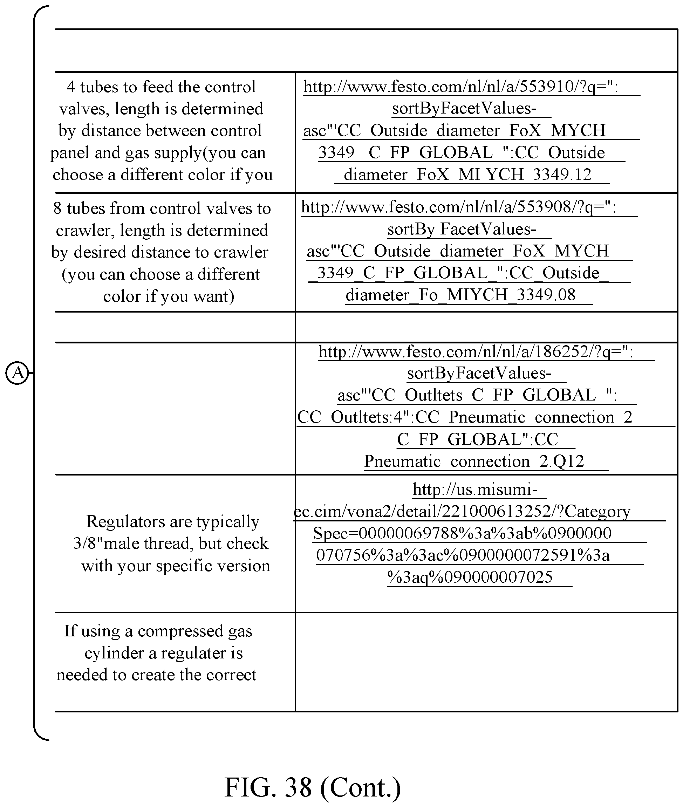

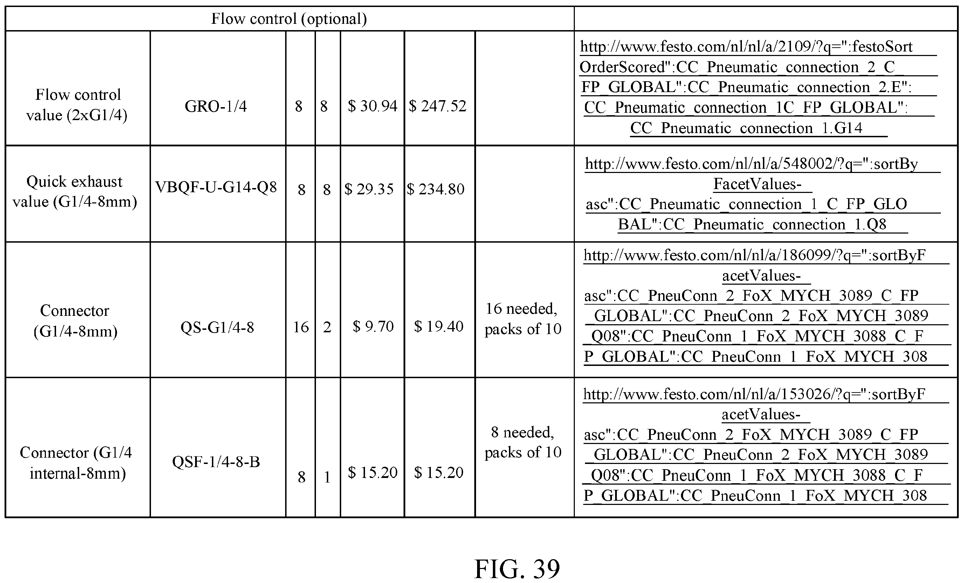

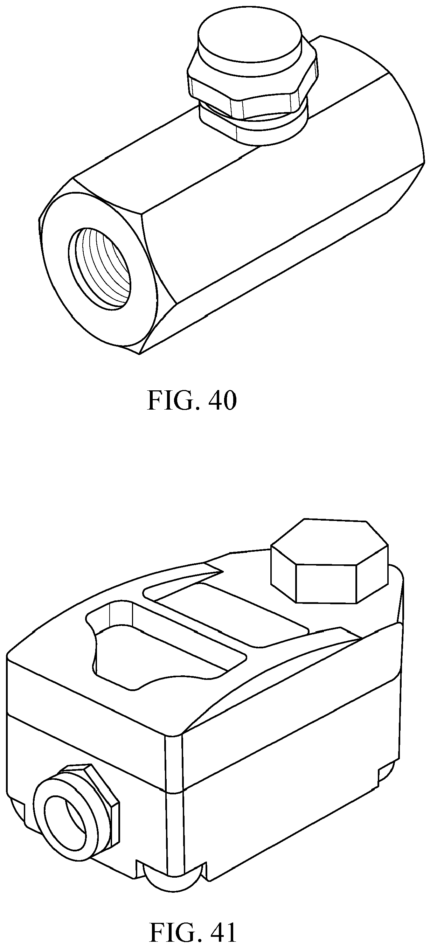

FIG. 38 is a table listing tubes and compress gas connections according to some embodiments for the crawler of FIG. 11. FIG. 39 is a table listing flow control components according to some embodiments for the crawler of FIG. 11. FIG. 40 is a flow control valve according to some embodiments for the pneumatic crawling robot of FIG. 11. FIG. 41 is a quick exhaust valve according to some embodiments for the pneumatic crawling robot of FIG. 11. This part consists of a flow control valve and a quick exhaust valve, with accompanying connectors to place them in line with the 8 mm tube. The quick exhaust valve should be placed closest to the crawler. This way the flow control valve will not restrict the flow when emptying a tube to change rotation direction

### Prototype of system

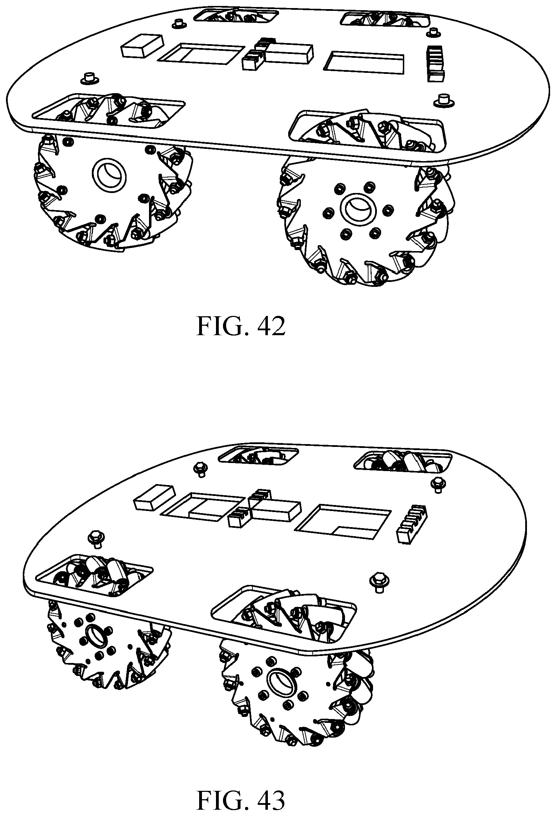

FIGS. 42 and 43 illustrate respective views of a prototype of the crawler of FIG. 11 according to some embodiments.

### Mecanum wheels and directional control sequencing

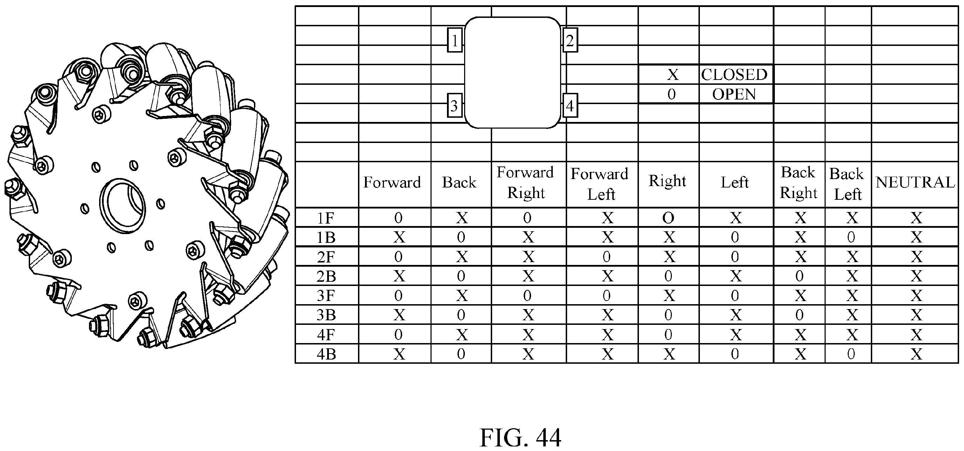

FIG. 44 is a schematic and corresponding table illustrating Mecanum wheels and directional control sequencing according to some embodiments for the crawler of FIG. 11.

### Controller

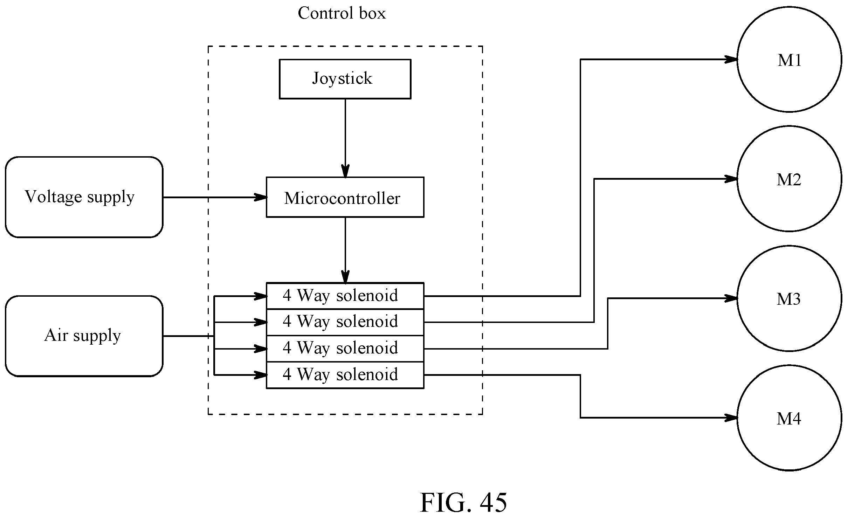

FIG. 45 is a schematic diagram of a controller according to some embodiments for controlling the crawler of FIG. 11.

The automated low-static pneumatic remote controlled robotic crawler for non-destructive testing of hazardous environments of the present disclosure as presented in the figures 10 to 45 generally works by pneumatic power of the wheels for movement of the crawler.

To make the automated pneumatic remote controlled robotic crawler for nondestructive testing of hazardous environments of the present disclosure as presented in the figures 10 to 45, a person would assemble the components according to the illustrations in the accompanying figures 10 to 45.

To use the automated low-static pneumatic remote controlled robotic crawler for non-destructive testing of hazardous environments of the present disclosure as presented in the figures 10 to 45, the valve controls need to be sequenced to allow for omnidirectional movement.

It will be understood that the other aspects and embodiments of the present technology set forth in the specification herein with reference to figures 1 to 9 of the accompanying drawings are in no way limited to the embodiments described in paragraphs 246 to 308 and /or figures 10 to 45.

Notwithstanding the foregoing, it will be understood to the person of ordinary skill in the art that in some alternative aspects of the present technology, apparatus, systems and/methods are provided that include the robotic crawler platform, air logic control system and other apparatus and associated methods of operation and use thereof as shown in the accompanying figures and described but in conjunction with additional electrical components and/or hardware. Whilst the apparatus, systems and/or method of such alternatively aspects may not have the advantages of meeting be capable for use in explosive conditions, they are still improved apparatus/systems and/or methods by virtue of the pneumatic configurations shown and described herein.

While embodiments of the robotic crawler platform system and method have been described in detail, it should be apparent that modifications and variations thereto are possible, all of which fall within the true spirit and scope of one or more embodiments of the present technology. With respect to the above description then, it is to be realized that the optimum dimensional relationships for the parts of one or more embodiments of the present technology, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present technology. For example, any suitable sturdy material may be used instead of the above-described. And although logically controlling a pneumatically driven multidirectional multi-motor crawler platform have been described, it should be appreciated that one or more embodiments of the present technology herein described is also suitable for providing a non-electric control system for controlling multiple pneumatically or hydraulically powered motors in any environment and device or even combined with electrical control systems or components in other applications.

Therefore, the foregoing is considered as illustrative only of the principles of some or all embodiments of the present technology. Further, since numerous modifications and changes will readily occur to those skilled in the art, it is not desired to limit one or more embodiments of the present technology to the exact construction and operation shown and described, and accordingly, all suitable modifications and equivalents may be resorted to, falling within the scope of one or more embodiments of the present technology.

## Claims

1. An apparatus comprising:
a robotic crawler platform including wheels and pneumatic motors, wherein said pneumatic motors are connected to said wheels; and
an air logic control system in fluid communication with said pneumatic motors.

2. The apparatus according to claim 1, wherein said robotic crawler platform further comprises air logic valves in fluid communication with said pneumatic motors and with said air logic control system.

3. The apparatus according to claim 2, wherein said air logic valves being in fluid communication with said pneumatic motors and controls fluid entering said pneumatic motors based on a pneumatic signal from said air logic control system.

4. The apparatus according to claim 3, wherein said air logic valves are multi-direction flow control valves each configured to receive a pneumatic power, to receive a forward pneumatic signal from said air logic control system and to receive a reverse pneumatic signal from said air logic control system.

5. The apparatus according to claim 4, wherein said multi-direction flow control valves provides the pneumatic power to a forward input of said pneumatic motors upon receiving said forward pneumatic signal and provides the pneumatic power to a reverse input of said pneumatic motors upon receiving said reverse pneumatic signal.

6. The apparatus according to claim 2, wherein said air logic control system comprises shuttle valves in fluid communication with said air logic valves, a user input assembly and a pneumatic source.

7. The apparatus according to claim 6, wherein said user input assembly comprises mechanically actuatable valves that provides pneumatic signals to said air logic valves.

8. The apparatus according to claim 7, wherein said user input assembly further comprises one or more shuttle valves that are in fluid communication with said mechanically actuatable valves and said air logic valves, wherein said shuttle valves are configured to control said pneumatic signals provided to said air logic valves.

9. The apparatus according to claim 8, wherein said air logic valves are multi-direction flow control valves each configured to receive a pneumatic power, to receive a forward pneumatic signal from said air logic control system and to receive a reverse pneumatic signal from said air logic control system.

10. The apparatus according to claim 9, wherein said multi-direction flow control valves provides the pneumatic power to a forward input of said pneumatic motors upon receiving said forward pneumatic signal from a forward shuttle valve and provides the pneumatic power to a reverse input of said pneumatic motors upon receiving said reverse pneumatic signal from a reverse shuttle valve.

11. The apparatus according to claim 10 further comprises a main pneumatic switch in fluid communication with said pneumatic motors, said main pneumatic switch is configured to control the pneumatic power from the pneumatic source to said multi-direction flow control valves.

12. The apparatus according to claim 1 further comprises a main pneumatic switch in fluid communication with said pneumatic motors, said main pneumatic switch is configured to control a pneumatic power from a pneumatic source to said pneumatic motors.

13. The apparatus according to claim 1, wherein said air logic control system is in fluid communication with said pneumatic motors by way of one or more static resistant hoses.

14. The apparatus according to claim 1, wherein said pneumatic motors are low revolutions per minute (RPM), high torque pneumatic motors.

15. The apparatus according to claim 1, wherein said robotic crawler platform and said air logic control system comply with explosive environmental standards.

16. The apparatus according to any one of the preceding claims, wherein said robotic crawler platform and said air logic control system are non-electric;

17. The apparatus according to any one of the preceding claims wherein said robotic crawler platform and said air logic control system are made from materials having anti-static properties.

18. A method of operating said apparatus of claim 1, said method comprising the steps of:
a) operating said robotic crawler platform in a confined space with said air logic control system exterior of the confined space; and
b) provide one or more user inputs to said air logic control system corresponding to one or more desired motions of said robotic crawler platform to control said pneumatic motors.

19. The method according to claim 16 further comprises the step of providing a pneumatic control signal to one or more of said pneumatic motors from said air logic control system based on said one or more user inputs.

20. An automated low-static pneumatic remote controlled robotic crawler for nondestructive testing of hazardous environments comprising:
a crawler main base unit;
a top plate disposed above the crawler main unit made of anti-static polymer;
axle bushings;
a base block for controls;
four independent omnidirectional Mecanum wheels attached to the crawler main unit via the axle bushings;
pneumatic motor to power the movement;
a frame to which the components attach;
a plurality of valves, hoses; and
a joystick manipulation control system dispensed through four four-way solenoid control system to control flow from the pneumatic motor to the omnidirectional wheels.
